(19) Europäisches Patentamt
European Patent Office
Office européen des brevets

(11) Veröffentlichungsnummer : **0 283 900 B1**

# (12) EUROPÄISCHE PATENTSCHRIFT

(45) Veröffentlichungstag der Patentschrift : **10.04.91 Patentblatt 91/15**

(51) Int. Cl.[5] : **C09B 62/51**, D06P 1/384, C07D 249/18, C07C 317/14

(21) Anmeldenummer : **88104058.8**

(22) Anmeldetag : **15.03.88**

## (54) Wasserlösliche Azoverbindungen, Verfahren zu ihrer Herstellung und ihre Verwendung als Farbstoffe.

(30) Priorität : **18.03.87 DE 3708767**

(43) Veröffentlichungstag der Anmeldung : **28.09.88 Patentblatt 88/39**

(45) Bekanntmachung des Hinweises auf die Patenterteilung : **10.04.91 Patentblatt 91/15**

(84) Benannte Vertragsstaaten : **BE CH DE ES FR GB IT LI**

(56) Entgegenhaltungen : **DE-A- 3 625 386**

(73) Patentinhaber : **HOECHST AKTIENGESELLSCHAFT
Postfach 80 03 20
W-6230 Frankfurt am Main 80 (DE)**

(72) Erfinder : **Springer, Hartmut, Dr.
Am Erdbeerstein 27
W-6240 Königstein/Taunus (DE)**
Erfinder : **Hussong, Kurt, Dr.
Am Flachsland 56
W-6233 Kelkheim/Taunus (DE)**

EP 0 283 900 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung liegt auf dem Gebiet der faserreaktiven Farbstoffe.

In der deutschen Offenlegungsschrift Nr. 3 625 386 werden durch eine β-Hydroxyethylsulfonyl-Gruppe substituierte Benzotriazolverbindungen beschrieben, die in 1-Stellung des Triazolrestes beispielsweise einen Aminophenylrest gebunden enthalten. Diese aminogruppenhaltigen Verbindungen werden als Zwischenprodukte zur Herstellung von faserreaktiven Triphendioxazinfarbstoffen eingesetzt.

Es wurden neue wasserlösliche Azoverbindungen entsprechend der allgemeinen Formel (1)

$$D-N=N-K \quad (1)$$

gefunden, die wertvolle faserreaktive Farbstoffeigenschaften besitzen.

In dieser Formel (1) bedeuten :

D ist ein Rest der allgemeinen Formel (2)

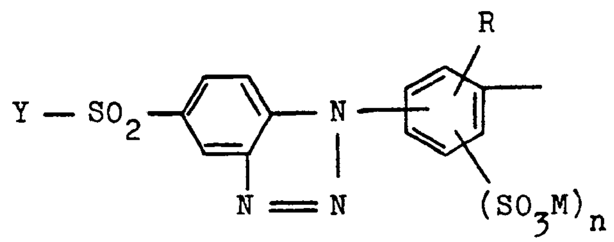

(2)

in welcher

Y die Vinylgruppe bedeutet oder eine Gruppe der allgemeinen Formel (3)

$$-CH_2-CH_2-X \quad (3)$$

in welcher

X ein Substituent ist, der durch ein Alkali unter Bildung der Vinylgruppe eliminierbar ist,

R ein Wasserstoffatom oder eine Hydroxygruppe, eine Alkylgruppe von 1 bis 4 C-Atomen, wie Ethyl- und insbesondere Methylgruppe, eine Alkoxygruppe von 1 bis 4 C-Atomen, wie Ethoxy- und insbesondere Methoxygruppe, eine Carboxygruppe oder ein Halogenatom, wie Chlor- und Bromatom, bevorzugt jedoch ein Wasserstoffatom ist,

n für die Zahl Null oder 1, bevorzugt 1, steht (wobei im Fall n = Null die Gruppe ein Wasserstoffatom bedeutet),

M ein Wasserstoffatom oder ein salzbildendes Metallatom, wie insbesondere ein Alkalimetallatom, wie beispielsweise Natrium, Kalium oder Lithium, ist und

die freie Bindung vom Benzolkern zur Azogruppe in meta- oder para-Stellung zu dem einen Stickstoffatom des Benztriazolrestes gebunden ist ;

K ist ein Rest einer einfach ankuppelbaren wasserlöslichen Kupplungskomponente, die noch eine Azogruppe enthalten kann, oder der Rest einer doppelankuppelbaren wasserlöslichen Kupplungskomponente, jeweils aus der Reihe der Aminobenzole, der Phenole, insbesondere deren Sulfonsäuren und Carbonsäuren, der Naphthole, insbesondere deren Sulfonsäuren, der Aminonaphthole, insbesondere deren Sulfonsäuren, der Acylamino-naphthole, insbesondere deren Sulfonsäuren, mit dem Acylrest einer Alkan- oder Alkencarbonsäure mit jeweils 1 bis 4 bzw. 2 bis 4 C-Atomen im Alkyl- bzw. Alkenylrest oder einer aromatischen Carbonsäure, wie der Benzoesäure, oder einer aromatischen Sulfonsäure, wie der Benzol- oder Toluolsulfonsäure, oder der N-substituierten Carbaminsäure, wie der N-Phenylureido-Rest, oder aus der Reihe der Dihydroxynaphthalinsulfonsäuren, der Phenylazo- und Naphthylazo-aminonaphtholsulfonsäuren, der 5-Pyrazolone und 5-Aminopyrazole, der Acetoacetylarylide, der 2-Hydroxy-6-pyridone und der Hydroxychinoline.

Alkalisch eliminierbare Substituenten X sind beispielsweise Halogenatome, wie das Bromatom und Chloratom, Estergruppen organischer Carbon- und Sulfonsäuren, wie ein Alkanoyloxyrest von 2 bis 5 C-Atomen, beispielsweise die Acetyloxygruppe, oder ein Sulfobenzoyloxy-, Benzoyloxy-, Phenylsulfonyloxy- oder Toluylsulfonyloxy-Rest, desweiteren beispielsweise die sauren Estergruppen der Phosphorsäure, der Schwefelsäure und der Thioschwefelsäure (Phosphato- bzw. Sulfato- bzw. Thiosulfatogruppen), ebenso Dialkylaminogruppen mit Alkylgruppen von jeweils 1 bis 4 C-Atomen, wie die Dimethylamino- und Diethylaminogruppe.

Bevorzugt ist Y die Vinylgruppe und insbesondere die β-Sulfatoethyl-Gruppe.

Sulfogruppen sind Gruppen entsprechend der allgemeinen Formel $-SO_3M$, Carboxygruppen sind Gruppen entsprechend der allgemeinen Formel $-COOM$, Sulfatogruppen sind Gruppen entsprechend der allgemeinen Formel $-OSO_3M$, Phosphonogruppen sind Gruppen der allgemeinen Formel $-PO_3M_2$, Thiosulfatogruppen sind Gruppen entsprechend der allgemeinen Formel $-S-SO_3M$ und Phosphatogruppen sind Gruppen entsprechend der allgemeinen Formel $-OPO_3M_2$, wobei M die obengenannte Bedeutung hat.

Von den erfindungsgemäßen Verbindungen der allgemeinen Formel (1) können beispielsweise solche Verbindungen hervorgehoben werden, in welchen K einen Rest der nachstehenden Formel (4a), (4b), (4c), (4d), (4e), (4f), (4g), (4h), (4i), (4k), (4m), (4n), (4p), (4q), (4r), (4s), (4t), (4v) und (4w) bedeuten :

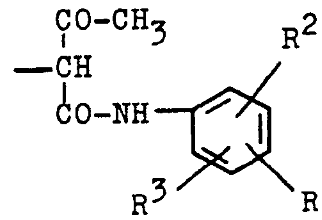

(4a)

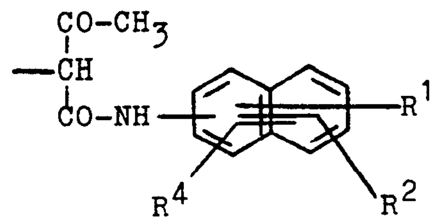

(4b)

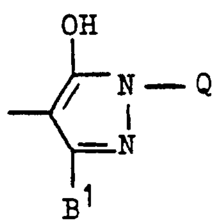

(4c)

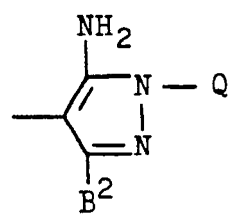

(4d)

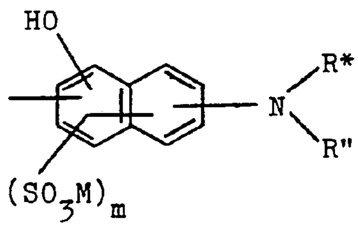
(4e)

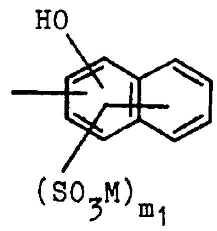
(4f)

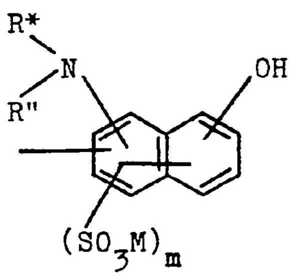
(4g)

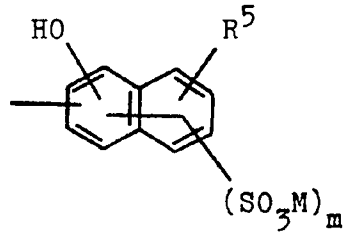
(4h)

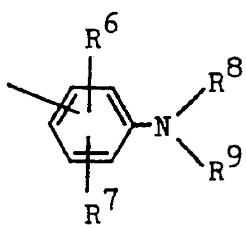
(4i)

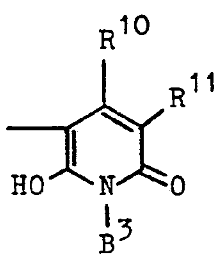
(4k)

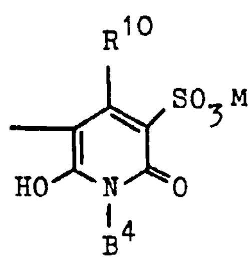
(4m)

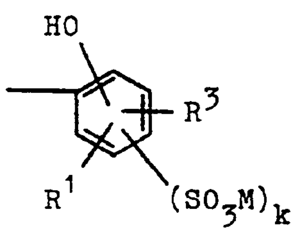
(4n)

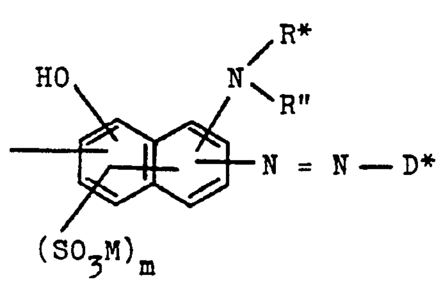
(4p)

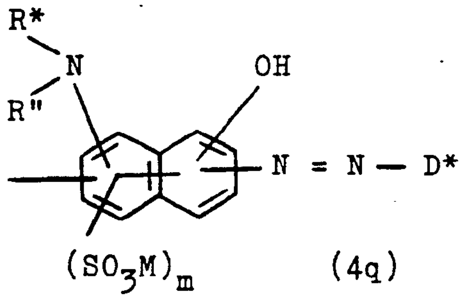

(4q)

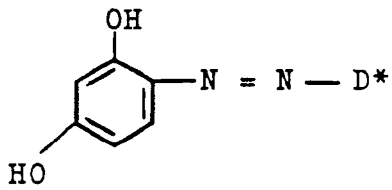

(4r)

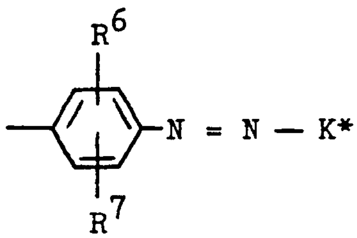

(4s)

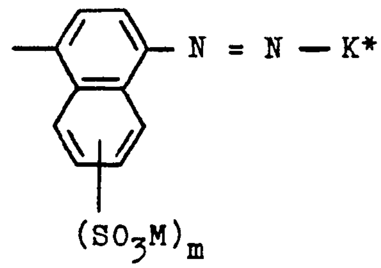

(4t)

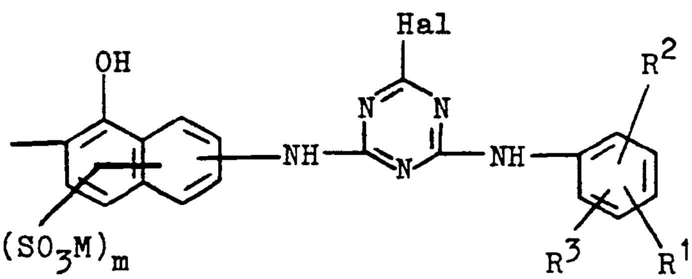

(4v)

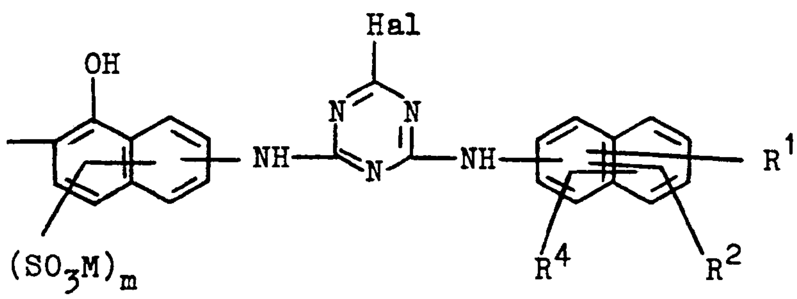

(4w)

In diesen Formeln bedeuten :

$R^1$ ist ein Wasserstoffatom oder eine Carboxy- oder Sulfogruppe oder eine Gruppe der allgemeinen Formel $-SO_2-Y$ mit Y der obigen Bedeutung ;

$R^2$ ist ein Wasserstoffatom, eine Alkylgruppe von 1 bis 4 C-Atomen, wie insbesondere eine Methyl- oder Ethylgruppe, eine Alkoxygruppe von 1 bis 4 C-Atomen, wie insbesondere eine Methoxy- oder Ethoxygruppe, ein Chlor- oder Bromatom oder eine Carboxy- oder Sulfogruppe ;

$R^3$ ist ein Wasserstoffatom, eine Alkylgruppe von 1 bis 4 C-Atomen, wie insbesondere die Methyl- oder Ethylgruppe, eine Alkoxygruppe von 1 bis 4 C-Atomen, wie insbesondere die Methoxy- oder Ethoxygruppe, ein Chlor- oder Bromatom ;

$R^4$ ist ein Wasserstoffatom, eine Sulfo- oder Carboxygruppe, wobei $R^1$, $R^2$, $R^3$ und $R^4$ gleich oder verschieden voneinander sein können ;

$B^1$ ist eine Alkylgruppe von 1 bis 4 C-Atomen, wie insbesondere die Methylgruppe, eine Carboxygruppe, eine Carbalkoxygruppe von 2 bis 5 C-Atomen, die Carbamoylgruppe oder ein gegebenenfalls durch Sulfo, Carboxy, Methyl, Ethyl, Methoxy, Ethoxy und/oder Chlor substituierter Phenylrest ;
$B^2$ ist eine Alkylgruppe von 1 bis 4 C-Atomen, wie insbesondere die Methylgruppe, eine Carbalkoxygruppe von 2 bis 5 C-Atomen, die Carbamoylgruppe oder ein Phenylrest, der durch 1 oder 2 Substituenten aus der Gruppe Alkyl von 1 bis 4 C-Atomen, Alkoxy von 1 bis 4 C-Atomen, Chlor, Brom und Sulfo substituiert sein kann ;

Q ist ein Phenylrest, der substituiert sein kann, wie beispielsweise durch 1, 2 oder 3, bevorzugt 1 oder 2, Substituenten aus der Gruppe Chlor, Brom, Methyl, Ethyl, Methoxy, Ethoxy, Carboxy, Sulfo und Alkanoylamino, wie Acetylamino, und/oder durch eine Gruppe der allgemeinen Formel $-SO_2$-Y mit Y der obengenannten Bedeutung, oder ist ein Naphthylrest, der durch 1, 2 oder 3 Sulfogruppen und gegebenenfalls durch eine Alkylgruppe von 1 bis 4 C-Atomen, eine Alkoxygruppe von 1 bis 4 C-Atomen, ein Chloratom oder eine Alkanoylaminogruppe von 2 bis 5 C-Atomen und/oder durch eine Gruppe der allgemeinen Formel $-SO_2$-Y mit Y der obengenannten Bedeutung substituiert sein kann ;
R* ist ein Wasserstoffatom oder eine Alkylgruppe von 1 bis 4 C-Atomen, die durch einen Phenylrest substituiert sein kann ;
R" ist ein Wasserstoffatom, eine Alkylgruppe von 1 bis 4 C-Atomen, die durch einen Phenylrest substituiert sein kann, oder ist ein Phenylrest, der durch 1 oder 2 Substituenten aus der Gruppe Alkyl von 1 bis 4 C-Atomen, Alkoxy von 1 bis 4 C-Atomen, Chlor, Brom und Sulfo substituiert sein kann ;

$R^5$ ist die Phenylureidogruppe, eine Alkanoylaminogruppe von 2 bis 5 C-Atomen, Alkenoylaminogruppe von 3 bis 5 C-Atomen, wie Acetylamino-, Propionylamino- oder Acryloylaminogruppe, oder eine Benzoylaminogruppe, die durch Chlor, Methyl, Methoxy, Nitro, Sulfo und/oder Carboxy substituiert sein kann, bevorzugt der Acetylamino- oder Benzoylamino-Rest ;
$R^6$ ist ein Wasserstoffatom oder eine Alkylgruppe von 1 bis 4 C-Atomen, eine Alkoxygruppe von 1 bis 4 C-Atomen, eine Sulfogruppe, eine Carboxygruppe, eine Carbalkoxygruppe von 2 bis 5 C-Atomen, ein Halogenatom, wie Brom- oder Chloratom, oder eine Alkoxygruppe von 1 bis 4 C-Atomen, die durch eine Hydroxy-, Acetyloxy-, Carboxy-, Carbamoyl- oder Cyangruppe oder ein Halogenatom, wie Chloratom, substituiert ist ;
$R^7$ ist ein Wasserstoffatom, eine Alkylgruppe von 1 bis 4 C-Atomen, eine Alkoxygruppe von 1 bis 4 C-Atomen, ein Halogenatom, wie Brom- oder Chloratom, die Cyangruppe, die Trifluormethylgruppe, eine Alkoxygruppe von 1 bis 4 C-Atomen, die durch eine Hydroxy-, Acetyloxy-, Carboxy-, Carbamoyl- oder Cyangruppe oder durch ein Halogenatom, wie Chloratom, substituiert ist, oder ist eine Alkanoylaminogruppe von 2 bis 5 C-Atomen, die durch Chlor, Brom, Alkoxy von 1 bis 4 C-Atomen, Phenoxy, Phenyl, Hydroxy, Carboxy oder Sulfo substituiert sein kann, oder ist eine Alkenoylaminogruppe von 3 bis 5 C-Atomen, die durch Chlor, Brom, Carboxy oder Sulfo substituiert sein kann, oder ist die Benzoylaminogruppe, die im Benzolkern substituiert sein kann, beispielsweise durch Chlor, Methyl und/oder Sulfo, oder ist eine Alkylsulfonylgruppe von 1 bis 4 C-Atomen oder die Phenylsulfonylgruppe, die im Benzolkern substituiert sein kann, beispielsweise durch Chlor, Methyl und/oder Sulfo, oder ist eine Alkylsulfonylaminogruppe von 1 bis 4 C-Atomen, die durch Hydroxy, Sulfato, Chlor, Brom oder Alkoxy von 1 bis 4 C-Atomen substituiert sein kann, oder ist die Phenylsulfonylaminogruppe, die im Benzolkern substituiert sein kann, beispielsweise durch Chlor, Methyl und/oder Sulfo, oder ist die Carbamoylgruppe, die am Stickstoffatom durch 1 oder 2 Substituenten aus der Gruppe Alkyl von 1 bis 4 C-Atomen, durch beispielsweise Hydroxy, Sulfo, Carboxy, Sulfato oder Phenyl substituiertes Alkyl von 1 bis 4 C-Atomen, Cycloalkyl mit 5 bis 8 C-Atomen, Phenyl und durch beispielsweise Chlor, Sulfo, Methyl, Methoxy und/oder Carboxy substituiertes Phenyl mono- oder disubstituiert sein kann, oder ist die Sulfamoylgruppe, die am Stickstoffatom durch 1 oder 2 Substituenten aus der Gruppe Alkyl von 1 bis 4 C-Atomen, durch beispielsweise Hydroxy, Sulfo, Carboxy, Sulfato oder Phenyl substituiertes Alkyl von 1 bis 4 C-Atomen, Cycloalkyl mit 5 bis 8 C-Atomen, Phenyl und durch beispielsweise Chlor, Sulfo, Methyl, Methoxy und/oder Carboxy substituiertes Phenyl mono- oder disubstituiert sein kann, oder ist die Ureidogruppe oder eine Ureidogruppe, die am endständigen Stickstoffatom durch 1 oder 2 Substituenten aus der Gruppe Alkyl von 1 bis 4 C-Atomen, durch beispielsweise Hydroxy, Sulfo, Carboxy, Sulfato oder Phenyl substituiertes Alkyl von 1 bis 4 C-Atomen, Cycloalkyl mit 5 bis 8 C-Atomen, Phenyl und durch beispielsweise Chlor, Sulfo, Methyl, Methoxy und/oder Carboxy substituiertes Phenyl mono- oder disubstituiert sein kann ;
$R^8$ ist ein Wasserstoffatom oder eine Alkylgruppe von 1 bis 4 C-Atomen, die durch beispielsweise Hydroxy, Sulfo, Carboxy, Sulfato oder Phenyl substituiert sein kann, oder ist eine Alkenylgruppe von 2 bis 4 C-Atomen, die durch eine Carboxy- oder Sulfogruppe oder durch ein Chlor- oder Bromatom substituiert sein kann, oder ist ein Cycloalkylrest von 5 bis 8 C-Atomen ;

$R^9$ ist ein Wasserstoffatom oder eine Alkylgruppe von 1 bis 4 C-Atomen, die durch beispielsweise Hydroxy,

Sulfo, Carboxy, Sulfato oder Phenyl substituiert sein kann, oder ist eine Alkenylgruppe von 2 bis 5 C-Atomen, die durch eine Carboxy- oder Sulfogruppe oder durch ein Chlor- oder Bromatom substituiert sein kann, oder ist ein Cycloalkylrest von 5 bis 8 C-Atomen oder ein Phenylrest, der durch beispielsweise Chlor, Sulfo, Methyl, Methoxy und/oder Carboxy substituiert sein kann, oder ein Naphthylrest, der durch 1, 2 oder 3 Sulfogruppen und gegebenenfalls ein Chloratom, eine Alkoxygruppe von 1 bis 4 C-Atomen, eine Alkylgruppe von 1 bis 4 C-Atomen, eine Alkanoylaminogruppe von 2 bis 5 C-Atomen oder eine gegebenenfalls durch Sulfo substituierte Benzoylaminogruppe substituiert sein kann, oder ist ein heterocyclischer Rest, der einen oder zwei ankondensierte carbocyclische Ringe aufweisen kann, wobei die carbocyclischen Ringe noch substituiert sein können und der heterocyclische Rest an den C-Atomen und/oder an den heterocyclischen Atomen durch gegebenenfalls substituierte Alkylgruppen von 1 bis 4 C-Atomen und/oder gegebenenfalls substituierte Phenylreste substituiert sein kann, oder

$R^8$ und $R^9$ stellen zusammen mit dem Stickstoffatom und gegebenenfalls weiteren Heteroatom einen gesättigten heterocyclischen Rest dar, wie beispielsweise den Morpholino- oder Piperazinorest, dar ;

$R^{10}$ ist ein Wasserstoffatom oder eine Alkylgruppe von 1 bis 4 C-Atomen oder eine durch Alkoxy von 1 bis 4 C-Atomen oder Cyan substituierte Alkylgruppe von 1 bis 4 C-Atomen ;

$R^{11}$ ist ein Wasserstoffatom oder eine Sulfogruppe oder eine Sulfoalkylgruppe mit einem Alkylenrest von 1 bis 4 C-Atomen, wie Sulfomethylengruppe, oder eine Cyan- oder Carbamoylgruppe ;

und $R^*$, $R''$, $R^1$, $R^5$, $R^6$, $R^7$, $R^8$, $R^9$, $R^{10}$ und $R^{11}$ können zueinander gleiche oder voneinander verschieden sein;

$B^3$ ist ein Wasserstoffatom oder eine Alkylgruppe von 1 bis 6 C-Atomen, bevorzugt von 1 bis 4 C-Atomen, die durch Phenyl, Sulfo oder Sulfophenyl substituiert sein kann ;

$B^4$ ist ein Wasserstoffatom, eine Alkylgruppe von 1 bis 4 C-Atomen, eine durch eine Alkoxygruppe von 1 bis 4 C-Atomen, wie Methoxygruppe, oder durch eine Sulfo-, Carboxy-, Sulfato-, Acetylamino-, Benzoylamino- oder Cyangruppe substituierte Alkylgruppe von 1 bis 4 C-Atomen, eine Alkenylgruppe von 2 bis 4 C-Atomen, die Cyclohexylgruppe, die Phenylgruppe oder ein durch Substituenten aus der Gruppe Carboxy, Sulfo, Benzoylamino, Acetylamino und Chlor substituierter Phenylrest ;

k ist die Zahl Null oder 1 (wobei im Falle k = Null diese Gruppe für ein Wasserstoffatom steht) ;

m steht für die Zahl 1 oder 2 ;

$m_1$ steht für die Zahl 1, 2 oder 3 ;

D* hat eine der für die allgemeine Formel (2) angegebenen Bedeutungen, hierbei bevorzugt die gleiche Bedeutung, oder ist ein Phenylrest, der durch 1, 2 oder 3, bevorzugt 1 oder 2, Substituenten aus der Gruppe Alkyl von 1 bis 4 C-Atomen, Alkoxy von 1 bis 4 C-Atomen, Chlor, Brom, Hydroxy, Carboxy, Sulfo, Carbamoyl, Sulfamoyl und Alkanoylamino, bevorzugt hiervon Methyl, Methoxy, Ethoxy, Chlor, Sulfo, Carboxy und Hydroxy und/oder durch eine Gruppe der Formel $-SO_2-Y$ mit Y der obengenannten Bedeutung substituiert sein kann, wobei bevorzugt einer dieser Substituenten eine Sulfo- oder Carboxygruppe ist, oder ist ein Naphthylrest, der durch 1, 2 oder 3 Sulfogruppen oder durch 1 oder 2 Sulfogruppen und 1 oder 2 Gruppen der allgemeinen Formel $-SO_2-Y$ mit Y der obengenannten Bedeutung oder nur durch eine solche Gruppe $-SO_2-Y$ substituiert ist, wobei D und D* zueinander gleiche oder voneinander verschiedene Bedeutungen besitzen können ;

K* ist ein Rest aus einer der oben genannten und definierten allgemeinen Formeln (4a) bis (4m), wobei K und K* zueinander gleiche oder voneinander verschiedene Bedeutungen besitzen können ;

Hal ist ein Fluor- oder Chloratom ;

M hat eine der oben genannten Bedeutungen.

Die in den obigen Formeln (4e), (4f), (4g), (4h), (4i) und (4n) befindlichen freien Bindungen, welche zur Azogruppe führen, bzw. die Azogruppe in Formel (4p) und (4q) befinden sich in ortho-Stellung zur Hydroxy- bzw. Aminogruppe gebunden. Bevorzugt steht diese Hydroxygruppe in α-Stellung an den Naphthalinrest gebunden.

Alkylgruppen von 1 bis 4 C-Atomen sind bevorzugt die Ethyl- und insbesondere die Methylgruppe ; Alkoxygruppen von 1 bis 4 C-Atomen sind bevorzugt die Ethoxy- und insbesondere die Methoxygruppe ; Alkanoylaminogruppen von 2 bis 5 C-Atomen sind bevorzugt die Propionylaminogruppe und insbesondere die Acetylaminogruppe und Carbalkoxygruppen von 2 bis 5 C-Atomen bevorzugt die Carbomethoxy- und Carbethoxygruppe.

Von den erfindungsgemäßen Verbindungen der allgemeinen Formel (1) sind insbesondere diejenigen bevorzugt, in welchen K einen Rest der allgemeinen Formel (4c), (4f), (4h), (4p) oder (4q) bedeutet, in welchen wiederum die einzelnen Formelglieder die folgenden bevorzugten Bedeutungen besitzen :

$B^1$ ist eine Carboxy- oder Methylgruppe ;

Q ist ein Phenylrest, der durch 1 oder 2 Substituenten substituiert sein kann, die aus der folgenden Menge an Substituenten ausgewählt sind : 2 Methyl, 2 Methoxy, 1 Chlor oder Brom, 2 Sulfo, 1 Carboxy und 1 Vinylsulfonyl oder β-Sulfatoethylsulfonyl ;

$R^5$ ist die Acetylamino- oder Propionylaminogruppe oder eine Benzoylaminogruppe, die durch 1 oder 2 Substituenten aus der Gruppe Chlor, Methyl, Methoxy, Nitro und Sulfo substituiert sein kann ;
R' und R" sind beide ein Wasserstoffatom, und die Hydroxygruppe und die Gruppe –NR'R" in den Formeln (4p) und (4q) stehen in peri-Stellung an den Naphthalinkern gebunden.

Von Formel (4p) ist bevorzugt der Rest der allgemeinen Formel (4p*)

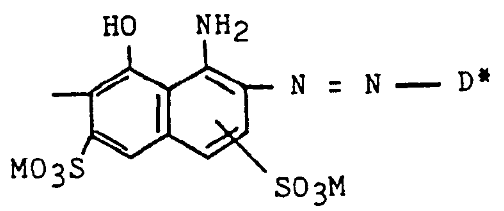

(4p*)

mit M und D* einer der obengenannten Bedeutungen. Insbesondere bevorzugt sind solche Verbindungen der allgemeinen Formel (1), in welchen K den durch 1, 2 oder 3 Sulfogruppen substituierten 1-Hydroxy-naphth-2-yl-Rest darstellt oder einen Rest der allgemeinen Formel (4c) bedeutet, in welcher $B^1$ eine Carboxy- oder Methylgruppe ist und Q für einen Phenylrest steht, der durch 1 oder 2 Substituenten substituiert ist, die aus der Gruppe von 2 Methylgruppen, 2 Ethoxygruppen, 2 Methoxygruppen, 2 Sulfogruppen, 1 Carboxygruppe oder 1 Chloratom ausgewählt sind, wobei einer der Substituenten zwingend eine Carboxy- oder Sulfogruppe ist, oder der Phenylrest durch eine Vinylsulfonyl- oder β-Sulfatoethylsulfonyl-Gruppe substituiert ist und zusätzlich durch 1 oder 2 Substituenten substituiert sein kann, die aus der Gruppe von 1 Methyl, 2 Methoxy, 1 Chlor und 1 Sulfo ausgewählt sind.

Die vorliegende Erfindung betrifft weiterhin Verfahren zur Herstellung der erfindungsgemäßen Azoverbindungen der allgemeinen Formel (1), beispielsweise durch Kupplung einer Diazoniumverbindung entsprechend der allgemeinen Formel (4)

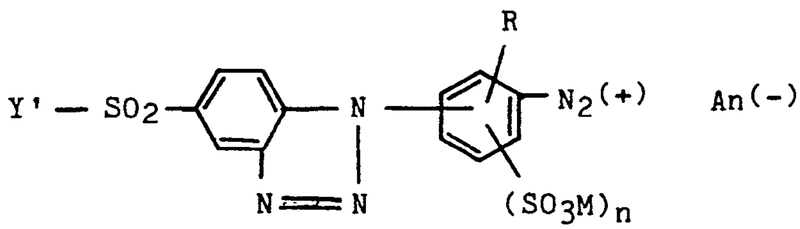

(4)

in welcher $An^{(-)}$ ein für Diazoniumverbindungen übliches farbloses Anion (bzw. im Falle eines mehrwertigen Anions das Äquivalent dieses Anions) ist, wie das Chlorid-, Sulfat- oder Hydrogensulfat-Anion, und Y' eine der Bedeutungen von Y hat oder die β-Hydroxyethyl-Gruppe ist sowie R, M und n die obengenannten Bedeutungen haben,
mit einer Kupplungskomponente der allgemeinen Formel H-K mit K der obengenannten Bedeutung ; sofern K, wie oben angegeben, eine bivalente Kupplungskomponente ist, kann eine Disazoverbindung, sofern dieser erwünscht ist, durch Umsetzung dieser bivalenten Kupplungskomponente mit der zweifach äquimolaren Menge der Diazokomponente hergestellt werden. Im Falle der Verwendung einer Verbindung (4) mit Y' gleich einer β-Hydroxyethyl-Gruppe wird diese β-Hydroxyethylgruppe in der gebildeten Azoverbindung in eine Gruppe Y der erfindungsgemäßen Azoverbindung (1), wie später noch angegeben, übergeführt.

Die Diazoniumverbindung der allgemeinen Formel (4) läßt sich analog den bei Diazotierungsreaktionen üblichen Verfahrensweisen durch Umsetzung einer Aminoverbindung der allgemeinen Formel (5)

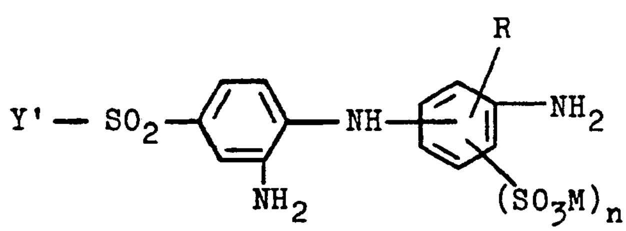

(5)

in welcher Y', R, M und n die obengenannten Bedeutungen haben, mit der zweifach äquimolaren Menge eines Diazotierungsagenzes, wie beispielsweise salpetriger Säure bzw. Natriumnitrit in Gegenwart einer starken Mineralsäure, wie Salzsäure, herstellen. Bei dieser Diazotierungsreaktion der Aminoverbindung der allgemeinen Formel (5) erfolgt neben der Diazotierung der endständigen Aminogruppe auch Diazotierung der primären Aminogruppe des ortho-Phenylendiamin-Anteils, die zum sofortigen Benztriazol-Ringschluß führt.

Das erfindungsgemäße Verfahren zur Herstellung der Azoverbindungen (1) durch Diazotierung und Kupplung kann deshalb in vorteilhafter Weise auch so durchgeführt werden, daß man eine Aminoverbindung der allgemeinen Formel (5) mit der zweifach äquimolaren Menge an dem Diazotierungsagenz zur Diazoniumverbindung des Amins der allgemeinen Formel (4) umsetzt und dieses sodann mit einer Kupplungskomponente der allgemeinen Formel H-K kuppelt.

Die Diazotierungs- und Kupplungsreaktionen erfolgen in üblicher und altbekannter Weise, so die Diazotierung in der Regel bei einer Temperatur zwischen −5°C und +15°C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 30°C in bevorzugt wäßrigem Medium.

Ist die Kupplungskomponente eine doppelankuppelbare, bivalente Verbindung, enthält sie beispielsweise eine kupplungsfähige Aminogruppe und gleichzeitig eine kupplungsfähige Hydroxygruppe, so kann zur Herstellung einer Disazoverbindung die Kupplung zunächst mit dem ersten Mol der Diazoniumverbindung des Amins im sauren pH-Bereich zur Monoazoverbindung erfolgen und die zweite Kupplungsreaktion mit dem zweiten Mol der Diazoniumverbindung des Amins anschließend im schwach sauren bis schwach alkalischen Bereich. Diese Verfahrensweise gilt beispielsweise für die Verbindungen entsprechend den allgemeinen Formeln (4p) und (4q), so durch Kupplung der Aminonaphtholsulfonsäure zunächst mit dem ersten Mol der Diazoniumverbindung des Amins der allgemeinen Formel (4) oder eines anderen aromatischen Amins entsprechend der allgemeinen Formel $D^*$-$NH_2$ mit $D^*$ der obengenannten anderen Bedeutung als D im sauren Medium und sodann durch Kupplung der gebildeten Monoazoverbindung mit dem zweiten Mol einer Diazoniumverbindung eines Amins $D^*$-$NH_2$ mit $D^*$ der obengenannten Bedeutung im schwach sauren, neutralen oder schwach alkalischen Bereich, wobei $D^*$ zwingend eine der für D angegebenen Bedeutungen besitzt, sofern die erste Kupplungsreaktion nicht mit einer Diazoniumverbindung eines Amins (4) durchgeführt wurde, so insbesondere zunächst bei einem pH-Wert von etwa 1 bis 2,5 und anschließend bei einem pH-Wert zwischen 4 und 6,5, wobei, sofern die Diazoniumverbindung der Aminoverbindung (4) in beiden Kupplungsreaktionen identisch ist, die erste und zweite Kupplungsreaktion in ein und demselben Ansatz, zunächst im angegebenen sauren Bereich und sodann im schwach sauren bis schwach alkalischen Bereich, durchgeführt werden kann. Zur Herstellung einer Disazoverbindung entsprechend der allgemeinen Formel (4r) erfolgt die Umsetzung der Kupplungskomponente Resorcin mit der bzw. den Diazoniumverbindung(en) vorteilhaft zunächst bei einem pH-Wert zwischen 0,8 und 2 und sodann bei einem pH-Wert zwischen 6 und 7,5.

Disazoverbindungen entsprechend der allgemeinen Formel (1), deren Kupplungskomponente K eine Azogruppierung besitzt, somit der Rest einer Azoverbindung ist, die aus einer Kupplungskomponente und einer kupplungsfähigen Diazokomponente aufgebaut sind, wie beispielsweise der Rest einer Kupplungskomponente entsprechend der allgemeinen Formel (4s) oder (4t), lassen sich auch erfindungsgemäß in der Weise herstellen, daß man zunächst die Diazoniumverbindung eines Amins (4) mit der aminogruppenhaltigen und somit diazotierbaren Kupplungskomponente, wie beispielsweise in den Formeln (4s) und (4t) die durch die Substituenten $R^6$ und $R^7$ substituierten Anilin- bzw. Sulfo-aminonaphthalin-Komponenten, kuppelt und in der so gebildeten Amino-Azoverbindung die Aminogruppe diazotiert und mit einer Kupplungskomponente, wie beispielsweise der Kupplungskomponente H-$K^*$, zur Disazoverbindung kuppelt.

Alle diese Umsetzungsmöglichkeiten zur Synthese von Disazoverbindungen sind analog den in der Literatur bekannten oder dem Fachmann geläufigen Methoden zur Synthese von Disazoverbindungen.

Kupplungskomponenten, die zur Herstellung der erfindungsgemäßen Farbstoffe verwendet werden können und beispielsweise den allgemeinen Formeln (4a) bis (4n) entsprechen, sind beispielsweise : 1,3-Diamino-benzol-5-sulfonsäure, Phenol, Kresol, Resorcin, 2-Ethoxy-phenol, 4-Methylphenol, 3-Sulfophenol, Salicylsäure, 3-Sulfonaphthol, 4-Sulfonaphthol, 5-Sulfonaphthol, 3,6-Disulfonaphthol (8), 4,6-Disulfonaphthol (8), 1-Naphthol-3,8-disulfonsäure, 1-Aminonaphthol (8)-4-sulfonsäure, 1-Aminonaphthol (8)-5-sulfonsäure, 1-Amino-8-naphthol-2,4-disulfonsäure, 2-Amino-5-naphthol-7-sulfonsäure, 2-Amino-5-naphthol-1,7-disulfonsäure, 1-Amino-5-naphthol-7-sulfonsäure, 2-Amino-naphthol (8)-6-sulfonsäure, 2-Amino-8-naphthol-3,6-disulfonsäure, 2-Amino-8-naphthol-4,6-disulfonsäure, 1-Amino-8-naphthol-3,6- oder -4,6-disulfonsäure, 1-Acryloylamino-8-naphthol-3,6- oder -4,6-disulfonsäure, 1-Propionylamino-8-naphthol-3,6-disulfonsäure, 1-Acetylamino-8-naphthol-4-sulfonsäure, 1-Acetylamino-8-naphthol-3,6- oder -4,6-disulfonsäure, 1-Benzoylamino-8-naphthol-3,6- oder -4,6-disulfonsäure, 2-Naphthol-5,7-disulfonsäure,

2-Naphthol-3,6- und -6,8-disulfonsäure, 1,8-Dihydroxynaphthalin-3,6-disulfonsäure, 1,8-Dihydroxynaphthalin-6-sulfonsäure, 1-Naphthol-3,6,8-trisulfonsäure, 2-Acetylamino-5-naphthol-7-sulfonsäure, 2-Benzoylamino-8-naphthol-6-sulfonsäure, 2-(p'-Tosylamino)-5-naphthol-7-sulfonsäure, 2-Acetylamino-8-naphthol-3,6-disulfonsäure, 2-Acetylamino-5-naphthol-1,7-disulfonsäure, 2-Benzoylamino-8-naphthol-6-sulfonsäure, 2-Phenylsulfonylamino-5-naphthol-7-sulfonsäure, 2-(N-Methyl-N-acetyl)-amino-8-naphthol-6-sulfonsäure, N-Ethyl-N-benzylanilin-3-sulfonsäure, N,N-Bis(β-hydroxyethyl)-anilin, N,N-Bis-(β-sulfatoethyl)-anilin, N,N-Bis-(β-hydroxyethyl)-2-methoxy-5-chlor-anilin, N-(β-Sulfatoethyl)-2,5-dimethoxyanilin, N-(β-Sulfatoethyl)-2-chloranilin, Acetoacetyl-2-naphthylamid-5-sulfonsäure, N-Acetoacetylanilin-3- oder -4-sulfonsäure, N-Acetoacetyl-2-methoxy-5-sulfo-anilin, N-Acetoacetyl-4-methoxy-3-sulfoanilin, N-Acetoacetyl-2-methoxy-5-methyl-4-sulfo-anilin, N-Acetoacetyl-2,5-dimethoxy-4-sulfo-anilin, 1-(4'-Sulfophenyl)-3-methyl-pyrazolon (5), 1-(4'-Sulfophenyl)-3-carboxy-pyrazolon (5), 1-(2'-Chlor-5'-sulfo-phenyl)-3-methyl- oder -3-carboxy-pyrazolon (5), 1-(3'-Sulfophenyl)-3-carboxypyrazolon (5), 1-(2'-Methoxy-4'-sulfophenyl)-3-carboxy-pyrazolon (5), 1-(3'-Sulfophenyl)-3-methyl-5-amino-pyrazol, 1-(4'-Sulfo-phenyl)-3-methyl-5-amino-pyrazol, 1-(2'-Methoxy-5'-sulfo-phenyl)-3-methyl-5-aminopyrazol, 1-(2'-Methoxy-5'-methyl-4'-sulfophenyl)-3-methyl-5-aminopyrazol, 1-(2'-Chlor-5'-sulfo-phenyl)-3-methyl-5-aminopyrazol, 1-(3'-Amino-4'-sulfo-phenyl)-3-carbethoxy-pyrazolon (5), 1-(2',4',6'-Trimethyl-3'-amino-5'-sulfophenyl)-3-carbethoxy-pyrazolon (5), 1-(3'-Amino-6'-methyl-phenyl)-3-carboxy-pyrazolon-(5), 2-N-Methylamino-8-naphthol-6-sulfonsäure, 3-Carboxy-pyrazolon (5), 1-Phenyl-3-carboxy-pyrazolon (5), 1-(4'-Nitrophenyl)-3-carboxy-pyrazolon (5), 1-(3'-Acetylaminophenyl)-3-carboxy-pyrazolon (5), 1-(3'-Carboxyphenyl)-3-methyl-pyrazolon (5), 2,3-Hydroxynaphthoesäure, 8-Hydroxy-chinolin-5-sulfonsäure, 1,4-Dimethyl-2-hydroxy-6-pyridon-5-sulfonsäure, Anilin-N-methan-sulfonsäure, 2-Amino-5-naphthol-7-sulfonsäure, 2-Methylamino-8-naphthol-6-sulfonsäure, Diphenylamino-2,5-disulfonsäure, Diphenylamino-4'-sulfonsäure.

Die erfindungsgemäß zur Synthese der erfindungsgemäßen Azoverbindungen (1) einsetzbaren Verbindungen entsprechend den allgemeinen Formeln (4) und (5) sind bisher noch nicht bekannt. Die Erfindung betrifft somit auch diese Verbindungen, Verfahren zu deren Herstellung und ihre Verwendung zur Synthese von Farbstoffen, wie insbesondere zu den erfindungsgemäßen Azoverbindungen (1). Sie lassen sich analog bekannten Verfahrensweisen der Umsetzung von Nitrochlorbenzolen mit Aminen herstellen, so beispielsweise zunächst durch Umsetzung von 2-Chlor-5-(β-hydroxyethylsulfonyl)-nitrobenzol mit einer Verbindung der allgemeinen Formel (6)

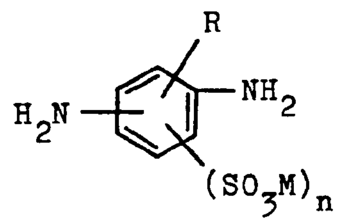

(6)

in welcher R, M und n die obengenannten Bedeutungen haben und die beiden primären Aminogruppen in meta- oder para-Stellung zueinander an den Benzolkern gebunden sind. Die Umsetzung erfolgt in hierfür üblichen und geeigneten Löse- oder Verdünnungsmitteln und in Gegenwart eines säurebindenden Mittels, in der Regel bei einer Temperatur zwischen 50 und 80°C. Geeignete Lösemittel sind beispielsweise Wasser oder ein organisches Löse- oder Verdünnungsmittel oder ein Gemisch von Wasser und einem Wasser mischbaren organischen Lösemittel. Organische Löse- oder Verdünnungsmittel sind beispielsweise Wasser, Alkanole von 1 bis 6 C-Atomen, bevorzugt 1 bis 4 C-Atomen, wie beispielsweise Methanol, Dioxan, Toluol, die Xylole, Chlorbenzol, o-Dichlorbenzol, m-Dichlorbenzol, Dimethylformamid und N-Methyl-pyrrolidon ; als Lösemittel kann auch das Phenylendiamin der Formel (6) selbst im Überschuß verwendet werden.

Säurebindende Mittel sind beispielsweise Kaliumcarbonat, Magnesiumoxid, Natriumcarbonat, Natriumhydroxid, Triethylamin und Triethanolamin. In wäßrigem Medium wird ein pH-Wert zwischen 6 und 12, bevorzugt zwischen 8 und 10, eingehalten. Solche Verfahrensweisen sind beispielsweise aus den Verfahren zur Herstellung substituierter Phenyl-(β-hydroxyethyl)-sulfone bekannt (s. bspw. deutsche Offenlegungsschrift Nr. 3 502 991). Das 2-Chlor-5-(β-hydroxyethylsulfonyl)-nitrobenzol selbst ist im Beispiel 5 der deutschen Patentschrift Nr. 859 462 beschrieben.

Phenylen-diamine entsprechend der allgemeinen Formel (6) sind beispielsweise 1,3-Diamino-benzol, 1,4-Diamino-benzol, 1-Sulfo-2,4-diamino-benzol, 1-Sulfo-2,5-diamino-benzol, 1-Carboxy-2,4-diamino-benzol, 1-Carboxy-2,5-diamino-benzol, 1-Methyl-2,4-diamino-benzol, 1-Methyl-2,5-diamino-benzol,

1-Hydroxy-2,4-diamino-benzol, 1-Hydroxy-2,5-diamino-benzol, 1-Chlor-2,4-diamino-benzol, 1-Chlor-2,5-diamino-benzol, 1-Methoxy-2,4-diamino-benzol und 1-Methoxy-2,5-diamino-benzol.

Die auf diese Weise erfindungsgemäß erhältlichen und ebenfalls neuen, erfindungsgemäßen Nitro-anilin-Verbindungen entsprechend der allgemeinen Formel (7)

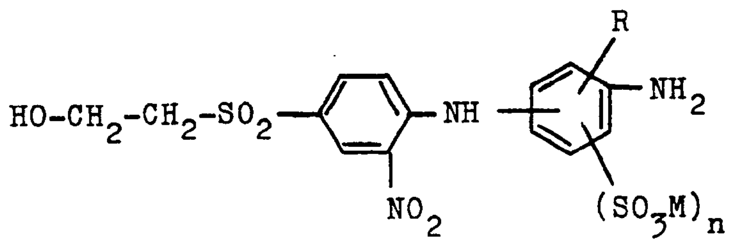

(7)

in welcher R, M und n die obengenannten Bedeutung haben, werden sodann analog bekannten Verfahrensweisen, nachdem sie beispielsweise aus dem Reaktionsansatz durch Kristallisation oder durch Abdestillieren des Lösemittels oder überschüssigen Amins oder durch Ansäuern und Filtration isoliert wurden, zur Aminoverbindung entsprechend der allgemeinen Formel (5) reduziert, so durch katalytische Hydrierung mit Wasserstoff an Palladium, Platin oder Raney-Nickel bei einer Temperatur zwischen 50 und 110°C und bei erhöhtem Druck oder durch Reduktion nach Béchamp mit Eisen in saurem Medium, beispielsweise mit Eisen in Ethanol/Eisessig. Die Reduktion kann in einem hierfür geeigneten Lösemittel, wie Wasser, Methanol oder Ethanol oder einer Mischung derselben, erfolgen.

Die im Hydrieransatz enthaltene Aminoverbindung kann – nach vorheriger Abtrennung von Katalysatoren oder metallischen Reduktionsmitteln – direkt, ohne Zwischenisolierung, unter gleichzeitigem Ringschluß zum Triazol diazotiert werden.

Sowohl die erfindungsgemäßen Verbindungen der allgemeinen Formel (1) als auch die der allgemeinen Formel (5) können, sofern deren Formelglied Y die β-Hydroxyethyl-Gruppe bedeutet, anschließend in üblicher und bekannter Verfahrensweise in Verbindungen übergeführt werden, in welchen Y eine andere Bedeutung als die β-Hydroxyethyl-Gruppe besitzt, so beispielsweise in deren Esterderivate, wie beispielsweise von mehrwertigen anorganischen Säuren oder von aliphatischen und aromatischen Carbon- oder Sulfonsäuren, so beispielsweise in Verbindungen, in welchen X für die Sulfato-, Phosphato-, Thiosulfato-, Acetyloxy- oder Toluylsulfonyloxy-Gruppe oder für ein Chloratom steht. Hierfür geeignete Veresterungs- und Acylierungsmittel sind beispielsweise die entsprechenden anorganischen oder organischen Säuren oder deren Anhydride oder Halogenide oder Amide, wie beispielsweise Schwefelsäure, Schwefeltrioxid enthaltende Schwefelsäure, Chlorsulfonsäure, Amidosulfonsäure, Phosphorsäure, Phosphoroxychlorid, Gemische aus Phosphorsäure und Phosphorpentoxid, Acetanhydrid, Toloulsulfochlorid und Thionylchlorid.

Diejenigen Verbindungen, in welchen Y für die Vinylgruppe steht, können aus deren analogen Esterderivaten mittels Alkali, so in wäßrigem Medium bei einem pH-Wert von 10 bis 12 und einer Temperatur zwischen 40 und 50°C während 10 bis 20 Minuten, hergestellt werden. Die Synthese von beispielsweise β-(Dialkylamino)-ethylsulfonyl- und β-Thiosulfatoethylsulfonyl-Derivaten der Verbindungen (1), (4) und (5) erfolgt durch Umsetzung von deren Vinylsulfonyl-Verbindungen mit dem entsprechenden Dialkylamin oder mit einem Alkalisalz der Thioschwefelsäure, wie Natriumthiosulfat.

Alle diese Verfahrensweisen der Überführung von einer Gruppe $-SO_2-Y$ in eine andere sind dem Fachmann auf diesem faserreaktiven Gebiet geläufig und zahlreich in der Literatur beschrieben.

Die erfindungsgemäßen Verbindungen der allgemeinen Formel (1) – im nachfolgenden als Verbindungen (1) bezeichnet – haben faserreaktive Eigenschaften und besitzen sehr wertvolle Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Deren Abscheidung und Isolierung aus den wäßrigen Syntheselösungen kann nach allgemein bekannten Methoden für wasserlösliche Verbindungen erfolgen, so beispielsweise durch Ausfällen aus dem Reaktionsmedium mittels eines Elektrolyten, wie beispielsweise Natriumchlorid oder Kaliumchlorid, oder aber durch Eindampfen der Reaktionslösung selbst, beispielsweise durch Sprühtrocknung. Falls die letztgenannte Art der Isolierung gewählt wird, empfiehlt es sich vielfach, vor dem Eindampfen eventuell in den Lösungen vorhandene Sulfatmengen durch Fällung als Calciumsulfat und Abtrennung durch Filtration zu entfernen.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten Substraten, insbesondere auf den genannten Fasermaterialien, nach den für wasserlösliche Farbstoffe, insbesondere faserreaktive Farbstoffe, bekannten Anwendungstechniken applizieren und fixieren, so beispielsweise, indem man die Verbindung (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind in der Literatur zahlreich beschrieben (s. bspw. europäische Patentanmeldungs-Veröffentlichung Nr. 0 181 585 A2).

Die erfindungsgemäßen Färbungen besitzen, insbesondere auf Cellulosefasermaterialien, gute Lichtechtheiten sowohl im trockenen Zustand der Färbung als auch im nassen, beispielsweise mit einer Schweißlösung befeuchteten, Zustand sowie gute Naßechtheiten, wie beispielsweise gute Waschechtheiten bei 60 bis 95°C, auch in Gegenwart von Perboraten, saure und alkalische Walk-, Überfärbe- und Schweißechtheiten, gute saure und alkalische Schweißechtheiten, eine hohe Dampfbeständigkeit, gute Alkali-, Säure-, Wasser- und Seewasserechtheiten, desweiteren eine gute Plissierechtheit, Bügelechtheit und Reibechtheit. Ebenso besitzen sie eine gute Säurelagerbeständigkeit ("acid fading") beim Lagern von feuchten, noch Essigsäure enthaltendem, gefärbtem Material.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben ; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die Absorptionsmaxima ($\lambda_{max}$-Werte) im sichtbaren Bereich der Alkalimetallsalze der Verbindungen (1) wurden in wäßriger Lösung bestimmt.

**Beispiel 1**

a) Zu einer Lösung mit einem pH-Wert von 8 und einer Temperatur von 50°C aus 188 Teilen 1,3-Diamino-benzolsulfonsäure in 500 Teilen einer etwa 6 %igen wäßrigen Natronlauge gibt man unter Rühren innerhalb von 30 Minuten und bei Einhaltung der Temperatur von 50°C eine Lösung von 266 Teilen 2-Chlor-5-(β-hydroxyethylsulfonyl)-nitrobenzol in 750 Teilen Dioxan und rührt den Ansatz noch eine Stunde bei 50°C, sodann eine Stunde bei 60°C und etwa 8 bis 10 Stunden bei 80°C weiter, bis dünnschichtchromatographisch kein Ausgangsprodukt mehr nachweisbar ist. Der danach auf eine Temperatur von 0 bis 5°C abgekühlte Ansatz wird mit etwa 300 Teilen einer konzentrierten wäßrigen Salzsäure auf einen pH-Wert von 1 gestellt.

Die gebildete 2-Amino-4-[2′-nitro-4′-(β-hydroxyethylsulfonyl)-phenylamino]-benzolsulfonsäure fällt als gelbes Ammoniumsalz aus. Es wird abfiltriert und mit einer wäßrigen 2n-Salzsäure gewaschen und getrocknet. Das Ammoniumsalz besitzt einen Schmelzpunkt von 234°C und zeigt folgende C, H, N-Analyse :

ber. : C 37,0 %, H 3,3 %, N 9,2 %,

gef. : 37,4 %, 3,5 %, 9,0 %,

bei einer Summenformel von $C_{14}H_{15}N_3O_8S_2 \cdot HCl$.

b) 455 Teile der unter a) hergestellten Amino-nitrodiphenylamin-Verbindung werden in 2500 Teilen eines Gemisches aus gleichen Teilen Ethanol und Wasser gelöst und katalytisch reduziert, beispielsweise mittels Wasserstoff über 50 Teilen Raney-Nickel bei einem Wasserstoffdruck von 50 bar und einer Temperatur von 100°C. Nach Reaktionsende wird der Katalysator bei 50°C durch Filtration entfernt, das Filtrat auf eine

Temperatur von 0°C bis 5°C abgekühlt und mit 170 Teilen einer konzentrierten wäßrigen Salzsäure auf einen pH-Wert von 1 gestellt.
Die gebildete 2-Amino-4-[2'-amino-4'-(β-hydroxyethylsulfonyl)-phenylamino]-benzolsulfonsäure fällt als Diammoniumsalz aus. Es wird durch Filtration isoliert und mit etwas verdünnter wäßriger Salzsäure nachgewaschen und getrocknet.
Es besitzt einen Schmelzpunkt von 223°C.
c) 23 Teile der unter b) hergestellten Diamino-diphenylamin-Verbindung werden in eine Mischung aus 50 Teilen 100%iger Schwefelsäure und 11 Teilen 20%igem Oleum unter Rühren bei einer Temperatur von 20°C eingetragen ; man rührt noch 5 Stunden weiter und gibt die Suspension sodann auf 300 Teile Eis, rührt noch 3 Stunden nach, saugt den gebildeten Niederschlag ab und trocknet ihn. Das erhaltene Diammoniumsalz der 2-Amino-4-[2'-amino-4'-β-sulfatoethylsulfonyl)-phenylamino]-benzolsulfonsäure besitzt einen Schmelzpunkt von 210°C und zeigt folgende C,N-Analyse :
gef. : C 24,0 %, N 6,0 %,
entsprechend einem C : N-Verhältnis von 14 : 3
bei einer Summenformel von $C_{14}H_{17}N_3O_9S_3 \cdot H_2SO_4$.
d) 24 Teile der unter c) hergestellten β-Sulfatoethylsulfonyl-Verbindung werden in 100 Teilen Wasser und 150 Teilen Eis gelöst. Diese Lösung versetzt man zunächst mit 25 Teilen einer wäßrigen konzentrierten Salzsäure und sodann langsam innerhalb von 60 Minuten bei einer Temperatur von etwa 5°C mit 20 Volumenteilen einer wäßrigen 5n-Natriumnitrit-Lösung. Man rührt den Ansatz bei dieser Temperatur noch etwa 1 Stunde nach und zerstört den geringen Nitritüberschuß, wie üblich, mit Amidosulfonsäure.
Das gebildete Diazoniumsalz des 1-(4'-Sulfo-3'-aminophenyl)-5-(β-sulfatoethylsulfonyl)-1,2,3-benzotriazols kann isoliert werden, indem man die Reaktionslösung mit der 1,1-fachen Menge an Ethanol bei 5°C versetzt, wobei das Diazoniumsalz als Niederschlag ausfällt, den man absaugt, mit wenig Ethanol wäscht und trocknet.
Das Diazoniumsalz zeigt für die Diazoniumgruppe eine IR-Bande bei 2180 $cm^{-1}$.

**Beispiel 2**

Zur Herstellung einer erfindungsgemäßen Azoverbindung geht man direkt von der unter Beispiel 1d) beschriebenen Diazoniumsalzlösung der Aminophenyl-benztriazol-Verbindung aus, indem man sie unter Rühren innerhalb von 10 Minuten bei einer Temperatur von 0 bis 10°C und unter Einhaltung eines pH-Wertes von 4 bis 4,5 mittels Natriumcarbonat mit 14, 4 Teilen 3-Carboxy-1-(4'-sulfophenyl) 5-pyrazolon versetzt. Man rührt den Ansatz noch 3 Stunden nach, gibt anschließend 10 Teile Kieselgur hinzu, filtriert ihn und salzt die gebildete erfindungsgemäße Azoverbindung aus dem Filtrat mit Natriumchlorid in einer Menge von 20% des Filtratvolumens aus.

Nach Filtration und Trocknung erhält man ein gelbes elektrolytsalzhaltiges (natriumchloridhaltiges) Pulver des Natriumsalzes der Verbindung

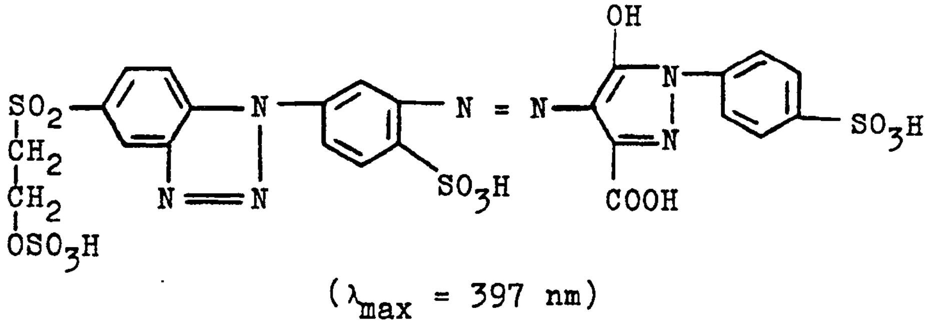

($\lambda_{max}$ = 397 nm)

die sehr gute faserreaktive Farbstoffeigenschaften besitzt und die in der Beschreibung genannten Fasermaterialien, wie insbesondere Cellulosefasermaterialien, beispielsweise Baumwolle, nach den in der Technik für faserreaktive Farbstoffe üblichen Anwendungsverfahren in farbstarken gelben, echten Tönen mit hohem Fixiergrad färbt. Von den guten Echtheitseigenschaften der mit der erfindungsgemäßen Azoverbindung erhältlichen Färbungen und Drucke können insbesondere die Waschechtheiten bei 60°C und 95°C sowie die Lichtechtheit und Schweißlichtechtheiten hervorgehoben werden. Die erfindungsgemäße Verbindung zeichnet sich auch durch hohe Farbstärke aus.

**Beispiel 3**

Man suspendiert 23 Teile des Diammoniumsalzes der 2-Amino-4-[2'-amino-4'-(β-hydroxyethylsulfonyl)-phenylamino]-benzolsulfonsäure (s. Bsp. 1b) in einem Gemisch aus 200 Teilen Wasser und 25 Teilen konzentrierter wäßriger Salzsäure, versetzt die Suspension mit 100 Teilen Eis und anschließend unter Rühren innerhalb von einer Stunde bei einer Temperatur zwischen 0 und 5°C mit 21 Volumenteilen einer wäßrigen 5n-Natriumnitritlösung. Überschüssiges Nitrit wird anschließend mit Amidosulfonsäure zerstört. Zu dieser Diazoniumsalzlösung des 1-(4'-Sulfo-3'-amino-phenyl)-5-(β-hydroxyethylsulfonyl)-1,2,3-benzotriazols gibt man innerhalb von 10 Minuten bei einer Temperatur zwischen 0 und 10°C unter Einhaltung eines pH-Wertes von 4 bis 4,5 14,4 Teile 3-Methyl-1-(β-hydroxyethylsulfonyl-phenyl)-5-pyrazolon. Man führt die Kupplungsreaktion unter 3-stündigem Rühren zu Ende, klärt den Ansatz mittels 10 Teilen Kieselgur und fällt die gebildete erfindungsgemäße β-Hydroxyethylsulfonyl-Monoazoverbindung aus, filtriert sie ab und trocknet sie.

Das getrocknete Produkt wird bei einer Temperatur zwischen 10 und 15°C in ein Gemisch aus 100 Teilen Schwefelsäure-Monohydrat und 22 Teilen 10%igem Oleum eingetragen ; man rührt noch etwa 4 Stunden nach und gibt den Ansatz sodann unter Rühren auf 400 Teile Eis, gibt anschließend 200 Teile Calciumcarbonat zur Einstellung eines pH-Wertes von 4,5 hinzu, erwärmt das Ganze auf 60°C, saugt das ausgefallene Calciumsulfat ab, wäscht dieses mit 200 Teilen heißem Wasser nach und versetzt die vereinigten Filtrate mit Natriumchlorid in einer Menge von 20%, bezogen auf das Volumen des Gesamtfiltrates. Man rührt noch 4 Stunden nach und filtriert die erfindungsgemäße Azoverbindung in Form des Natriumchlorid-haltigen Natriumsalzes ab.

Sie besitzt, in Form der freien Säure geschrieben, die Formel

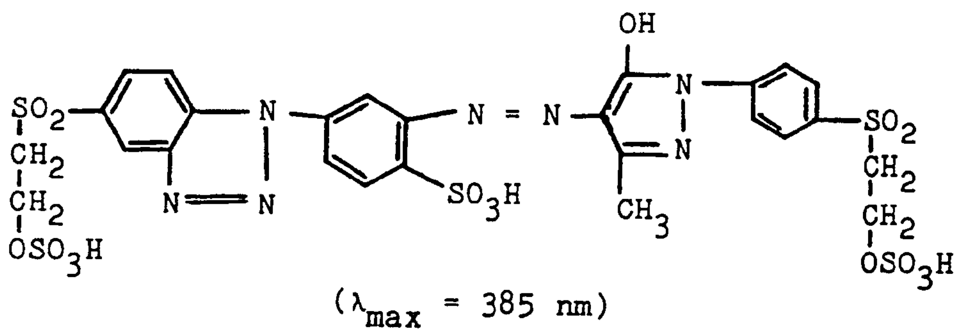

($\lambda_{max}$ = 385 nm)

und zeigt sehr gute faserreaktive Farbstoffeigenschaften. Sie färbt insbesondere Cellulosefasermaterialien nach den in der Technik üblichen Applikations- und Fixierverfahren in farbstarken, gelben Tönen mit guten Echtheitseigenschaften, von denen insbesondere die guten Waschechtheiten bei 60°C und 95°C sowie die Lichtechtheit ud Schweißlichtechtheiten hervorgehoben werden können.

**Beispiele 4 bis 53**

In den nachfolgenden Tabellenbeispielen sind weitere erfindungsgemäße Azoverbindungen entsprechend der, in Form der freien Säure geschriebenen, allgemeinen Formel (A)

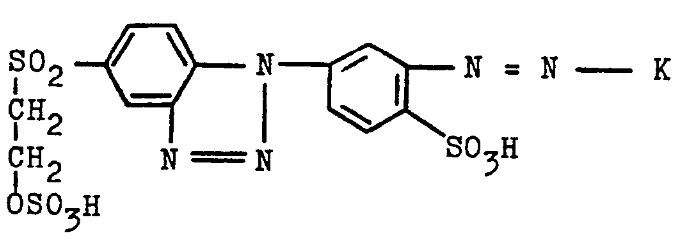

(A)

mit Hilfe ihrer Kupplungskomponente H-K beschrieben. Sie lassen sich in erfindungsgemäßer Weise, beispielsweise gemäß den obigen Ausführungsbeispielen durch Kupplung der angegebenen Kupplungskomponente mit dem Diazoniumsalz des 1-(4'-Sulfo-3'-amino-phenyl)-5-(β-hydroxy- oder -β-sulfatoethylsulfonyl)-1,2,3-benzotriazols, erforderlichenfalls unter anschließender Sulfatierung, herstellen und besitzen ebenfalls sehr gute

faserreaktive Farbstoffeigenschaften. Sie liefern farbstarke Färbungen und Drucke auf den in der Beschreibung genannten Materialien, wie insbesondere Cellulosefasermaterialien, nach den für faserreaktive Farbstoffe üblichen Applikations- und Fixiermethoden mit den in dem jeweiligen Tabellenbeispiel angegebenen Farbton (hier auf Baumwolle) mit guten Echtheitseigenschaften ; die in Klammern angegebenen Werte sind die Absorptionsmaxima ($\lambda_{max}$) in nm.

| Bsp. | Kupplungskomponente H-K in Formel (A) | Farbton |
|---|---|---|
| 4 | 4,6-Disulfo-1-acetylamino-8-naphthol | rot (510) |
| 5 | 3,6-Disulfo-2-amino-naphthalin | orange (473) |
| 6 | 5,7-Disulfo-2-amino-naphthalin | blaust. rot (543) |
| 7 | 4-Sulfo-1-naphthol | orange (485) |
| 8 | 3,6-Disulfo-1-naphthol | orange (483) |
| 9 | 1-(N-ß-Sulfoethyl)-4-methyl-2-hydroxy-6-pyridon | gelb (407) |
| 10 | 3,6,8-Trisulfo-2-amino-naphthalin | orange (453) |
| 11 | 6-Sulfo-3-acetylamino-8-naphthol | orange (461) |
| 12 | N,N-Bis-(ß-sulfatoethyl)-anilin | gelbbraun (437) |
| 13 | N-Ethyl-N-(ß-sulfatoethyl)-anilin | gelbbraun (453) |
| 14 | 6-Sulfo-2-acetylamino-8-naphthol | orange (464) |
| 15 | 3,6-Disulfo-1-benzoylamino-8-naphthol | rot (503) |
| 16 | 4,6-Disulfo-1-benzoylamino-8-naphthol | rot (504) |
| 17 | N,N-Bis-(ß-sulfatoethyl)-3-chlor-anilin | gelb (444) |
| 18 | 5-Sulfo-1-naphthol | orange (470) |
| 19 | 3,6-Disulfo-1-amino-2-{2'-sulfo-5'-[5"-(ß-sulfatoethylsulfonyl)-1",2",3"-benzotriazol-1"-yl]-phenyl-diazoyl}-8-naphthol | marineblau (600) |
| 20 | 3,6-Disulfo-1-amino-2-[4'-(ß-sulfato-ethylsulfonyl)-phenyl-diazoyl]-8-naphthol | marineblau (585) |
| 21 | 6-Sulfo-2-methylamino-8-naphthol | orange (471) |
| 22 | 4-Sulfo-diphenylamin | orange |
| 23 | 5-Sulfo-2-acetylamino-7-naphthol | orange |
| 24 | 3,6-Disulfo-2-acetylamino-8-naphthol | blaust. rot |
| 25 | 2,4-Disulfo-1-amino-8-naphthol | violett |
| 26 | 3,6-Disulfo-1-amino-8-naphthol (in 7-Stellung gekuppelt) | violett |
| 27 | 4,6-Disulfo-1-amino-8-naphthol (in 7-Stellung gekuppelt) | violett |
| 28 | 3,6-Disulfo-1-phenylureido-8-naphthol | blaust. rot |
| 29 | 3-Sulfo-1-naphthol | orange |
| 30 | 5-Sulfo-2-naphthol | rot |

| Bsp. | Kupplungskomponente H-K in Formel (A) | Farbton |
|---|---|---|
| 31 | 6-Sulfo-2-naphthol | rot |
| 32 | 8-Sulfo-2-naphthol | rot |
| 33 | 3,6-Disulfo-1-acetylamino-8-naphthol | blaust. rot |
| 34 | N,N-Bis-(ß-hydroxyethyl)-anilin | orange |
| 35 | 4,6-Disulfo-1-phenylureido-8-naphthol | |
| 36 | 3,6,8-Trisulfo-1-naphthol | rot |
| 37 | 3,6-Disulfo-2-naphthol | orange |
| 38 | 3,6-Disulfo-1-acetylamino-8-naphthol | blaust. rot |
| 39 | 4,6-Disulfo-1-acetylamino-8-naphthol | blaust. rot |
| 40 | N-Ethyl-N-(3'-sulfobenzyl)-anilin | orange |
| 41 | 5-Sulfo-1,4-dimethyl-2-hydroxy-6-pyridon | gelb |
| 42 | 2-Carboxy-acetoacetylanilin | gelb |
| 43 | 5-Sulfo-8-hydroxy-chinolin | orange |
| 44 | 3-Sulfo-acetoacetylanilin | gelb |
| 45 | 1-(4'-Sulfophenyl)-3-methyl-5-pyrazolon | gelb |
| 46 | 1-(4'-Sulfophenyl)-3-carbethoxy-5-pyrazolon | |
| 47 | 1-(2'-Chlor-5'-sulfophenyl)-3-methyl-5-pyrazolon | gelb |
| 48 | 1-(2',5'-Disulfophenyl)-3-methyl-5-pyrazolon | gelb |
| 49 | 1-(4',8'-Disulfo-naphth-2'-yl)-3-methyl-5-pyrazolon | gelb |
| 50 | 1-(4'-Sulfophenyl)-3-methyl-5-amino-pyrazol | gelb |
| 51 | 3,6-Disulfo-1-[4'-chlor-6'-(3"-sulfophenyl)-amino-1',3',5'-triazin-2'-yl]-amino-8-naphthol | blaustichig rot (516) |
| 52 | 3,6-Disulfo-1-{4'-chlor-6'-[4"-(ß-sulfatoethylsulfonyl)-phenyl]-amino-1',3',5'-triazin-2'-yl}-amino-8-naphthol | blaustichig rot (512) |
| 53 | 6,8-Disulfo-2-naphthol | orange |

**Beispiel 54**

a) 188 Teile 1,4-Diamino-benzolsulfonsäure setzt man in der im Beispiel 1a) angegebenen Verfahrensweise mit 266 Teilen 2-Chlor-5-(β-hydroxyethylsulfonyl)-nitrobenzol um. Nach Beendigung der Reaktion wird der auf 0 bis 5°C abgekühlte Ansatz mit etwa 300 Teilen einer konzentrierten wäßrigen Salzsäure auf

einen pH-Wert von 1 gestellt. Die gebildete 2-Amino-5-[2'-nitro-4'-(β-hydroxyethylsulfonyl)-phenylamino]-benzolsulfonsäure fällt als gelbes Ammoniumsalz aus. Sie wird abfiltriert und mit einer wäßrigen 2n-Salzsäure gewaschen und getrocknet. Sie besitzt einen Schmelzpunkt von 204°C und zeigt folgende C, H, N-Analyse :

ber. : C 37,0 %, H 3,3 %, N 9,2 %,
gef. : 37,0 %, 3,4 %, 9,2 %,
bei einer Summenformel von $C_{14}H_{15}N_3O_8S_2 \cdot HCl$.

b) 455 Teile der unter a) hergestellten Amino-nitrodiphenylamin-Verbindung werden in der im Beispiel 1b) angegebenen Verfahrensweise reduziert. Nach Reaktionsende wird der Katalysator bei 50°C durch Filtration entfernt, das Filtrat auf eine Temperatur von 0°C bis 5°C abgekühlt und mit 170 Teilen einer konzentrierten wäßrigen Salzsäure auf einen pH-Wert von 1 gestellt.

Die gebildete 2-Amino-5-[2'-amino-4'-(β-hydroxyethylsulfonyl)-phenylamino]-benzolsulfonsäure fällt als Diammoniumsalz aus. Es wird durch Filtration isoliert und mit etwas verdünnter wäßriger Salzsäure nachgewaschen und getrocknet.

Es besitzt einen Schmelzpunkt von 254°C.

c) 23 Teile der unter b) hergestellten Diamino-diphenylamin-Verbindung werden unter Rühren bei einer Temperatur von etwa 20°C in eine Mischung aus 50 Teilen 100%iger Schwefelsäure und 11 Teilen 20%igem Oleum eingetragen ; man rührt noch 5 Stunden weiter und gibt die Suspension danach auf 300 Teile Eis, rührt noch 3 Stunden nach, saugt den gebildeten Niederschlag ab und trocknet ihn.

Das erhaltene Diammoniumsalz der 2-Amino-5-[2'-amino-4'-(β-sulfatoethylsulfonyl)-phenylamino]-benzolsulfonsäure besitzt einen Schmelzpunkt von 180°C und zeigt folgende C,N-Analyse :

gef. : C 29,4 %, N 7,4 %,
entsprechend einem C : N-Verhältnis von 14 : 3
bei einer Summenformel von $C_{14}H_{17}N_3O_9S_3 \cdot H_2SO_4$.

d) 24 Teile der unter c) hergestellten β-Sulfatoethylsulfonyl-Verbindung werden in 100 Teilen Wasser und 150 Teilen Eis gelöst. Diese Lösung versetzt man zunächst mit 25 Teilen einer wäßrigen konzentrierten Salzsäure und sodann langsam innerhalb von 60 Minuten bei einer Temperatur von etwa 5°C mit 20 Volumenteilen einer wäßrigen 5n-Natriumnitrit-Lösung. Man rührt den Ansatz bei dieser Temperatur noch etwa 1 Stunde nach und zerstört den geringen Nitritüberschuß, wie üblich, mit Amidosulfonsäure.

Das gebildete Diazoniumsalz des 1-(4'-Sulfo-3'-aminophenyl)-5-(β-sulfatoethylsulfonyl)-1,2,3-benzotriazols kann isoliert werden, indem man die Reaktionslösung mit der 1,1-fachen Menge an Ethanol bei 5°C versetzt, wobei das Diazoniumsalz als Niederschlag ausfällt, den man absaugt, mit wenig Ethanol wäscht und trocknet.

Das Diazoniumsalz zeigt für die Diazoniumgruppe eine scharfe IR-Bande bei 2235 $cm^{-1}$.

**Beispiel 55**

Zur Herstellung einer erfindungsgemäßen Azoverbindung geht man direkt von der unter Beispiel 54d) beschriebenen Diazoniumsalzlösung aus, indem man sie unter Rühren innerhalb von 10 Minuten bei einer Temperatur von 0 bis 10°C und unter Einhaltung eines pH-Wertes von 4 bis 4,5 mittels Natriumcarbonat mit 15,8 Teilen 1-Naphthol-5-sulfonsäure versetzt. Man rührt den Ansatz noch 4 Stunden nach, gibt anschließend 10 Teile Kieselgur hinzu, filtriert ihn und salzt die gebildete erfindungsgemäße Azoverbindung aus dem Filtrat mit Natriumchlorid in einer Menge von 15% des Filtratvolumens aus.

Nach Filtration und Trocknung erhält man ein rotes elektrolytsalzhaltiges (natriumchloridhaltiges) Pulver des Natriumsalzes der Verbindung

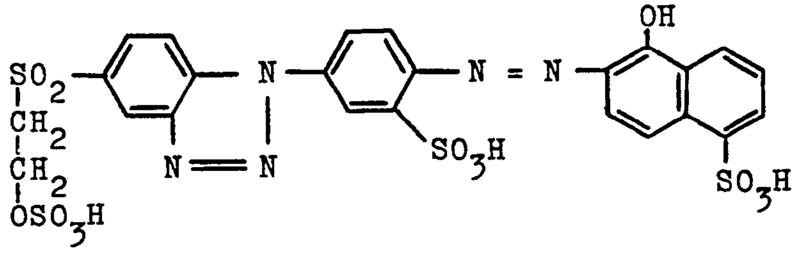

($\lambda_{max}$ = 498 nm)

die sehr gute faserreaktive Farbstoffeigenschaften besitzt und die in der Beschreibung genannten Fasermaterialien, wie insbesondere Cellulosefasermaterialien, beispielsweise Baumwolle, nach den in der Technik für faserreaktive Farbstoffe üblichen Anwendungsverfahren in farbstarken roten, echten Tönen mit hohem Fixiergrad färbt. Von den guten Echtheitseigenschaften der mit dieser erfindungsgemäßen Azoverbindung erhältlichen Färbungen und Drucke können insbesondere die Waschechtheiten bei 60°C und 95°C sowie Licht- und alkalische Schweißlichtechtheit hervorgehoben werden.

**Beispiel 56**

Man suspendiert 23 Teile des Diammoniumsalzes der 2-Amino-5-[2'-amino-4'-(β-hydroxyethylsulfonyl)-phenylamino]-benzolsulfonsäure (s. Bsp. 54b) in einem Gemisch aus 200 Teilen Wasser und 25 Teilen konzentrierter wäßriger Salzsäure, versetzt die Suspension mit 100 Teilen Eis und anschließend unter Rühren innerhalb von einer Stunde bei einer Temperatur zwischen 0 und 5°C mit 21 Volumenteile einer wäßrigen 5n-Natriumnitritlösung. Überschüssiges Nitrit wird anschließend mit Amidosulfonsäure zerstört. Zu dieser Diazoniumsalzlösung des 1-(4'-Sulfo-3'-amino-phenyl)-5-(β-hydroxyethylsulfonyl)-1,2,3-benzotriazols gibt man innerhalb von 10 Minuten bei einer Temperatur zwischen 0 und 10°C unter Einhaltung eines pH-Wertes von 4 bis 4,5 16,5 Teile 1-Naphthol-4-sulfonsäure. Man führt die Kupplungsreaktion noch unter 3-stündigem Rühren zu Ende, klärt den Ansatz mittels 10 Teilen Kieselgur bei 70°C und fällt die gebildete β-Hydroxyethylsulfonyl-Monoazoverbindung mittels Natriumchlorid aus, filtriert sie ab und trocknet sie.

Das getrocknete Produkt wird bei einer Temperatur zwischen 10 und 15°C in ein Gemisch aus 50 Teilen Schwefelsäure-Monohydrat und 11 Teilen 20%igem Oleum eingetragen ; man rührt noch etwa 5 Stunden nach und gibt den Ansatz sodann unter Rühren auf 400 Teile Eis, gibt anschließend 160 Teile Calciumcarbonat zur Einstellung eines pH-Wertes von 5 bis 5,5, hinzu, rührt eine Stunde nach, erwärmt das Ganze auf 50°C, saugt das ausgefallene Calciumsulfat ab, wäscht dieses mit 200 Teilen heißem Wasser nach und versetzt die vereinigten Filtrate mit Natriumchlorid in einer Menge von 10%, bezogen auf das Volumen des Gesamtfiltrates. Man rührt noch 4 Stunden nach und filtriert die erfindungsgemäße Azoverbindung in Form des Natriumchlorid-haltigen Natriumsalzes ab.

Sie besitzt, in Form der freien Säure geschrieben, die Formel

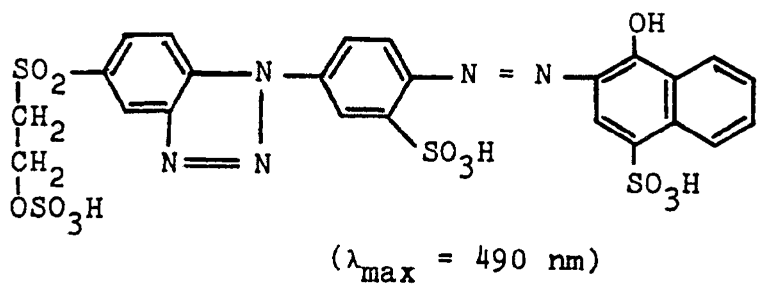

($\lambda_{max}$ = 490 nm)

und zeigt sehr gute faserreaktive Farbstoffeigenschaften. Sie färbt insbesondere Cellulosefasermaterialien nach den in der Technik üblichen Applikations- und Fixierverfahren in farbstarken, scharlachroten Tönen mit guten Echtheitseigenschaften, von denen insbesondere die guten Waschechtheiten bei 60°C und 95°C und die guten Schweißlichtechtheiten hervorgehoben werden können.

**Beispiele 57 bis 104**

In den nachfolgenden Tabellenbeispielen sind weitere erfindungsgemäße Azoverbindungen entsprechend der, in Form der freien Säure geschriebenen allgemeinen Formel (B)

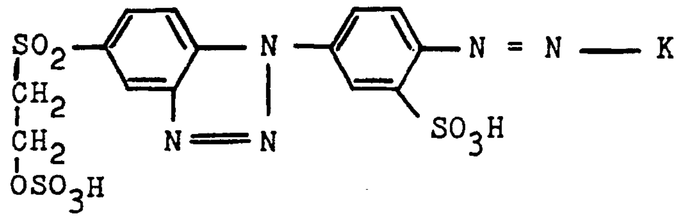 (B)

mit Hilfe ihrer Kupplungskomponente H-K beschrieben. Sie lassen sich in erfindungsgemäßer Weise, beispielsweise gemäß den obigen Ausführungsbeispielen durch Kupplung der angegebenen Kupplungskomponente mit dem Diazoniumsalz des 1-(3′-Sulfo-4′-amino-phenyl)-5-(β-hydroxy- oder β-sulfatoethylsulfonyl)-1,2,3-benzotriazols, erforderlichenfalls unter anschließender Sulfatierung, herstellen und besitzen ebenfalls sehr gute faserreaktive Farbstoffeigenschaften. Sie liefern farbstarke Färbungen und Drucke auf den in der Beschreibung genannten Materialien, wie insbesondere Cellulosefasermaterialien, nach den für faserreaktive Farbstoffe üblichen Applikations- und Fixiermethoden mit den in dem jeweiligen Tabellenbeispiel angegebenen Farbton (hier auf Baumwolle) mit guten Echtheitseigenschaften ; die in Klammern angegebenen Werte sind die Absorptionsmaxima ($\lambda_{max}$) in nm.

| Bsp. | Kupplungskomponente H-K in Formel (B) | Farbton |
|---|---|---|
| 57 | 4,6-Disulfo-1-acetylamino-8-naphthol | rot (504) |
| 58 | 3,6-Disulfo-1-naphthol | orange (488) |
| 59 | 1-(N-Sulfoethyl)-4-methyl-2-hydroxy-6-pyridon | gelb (415) |
| 60 | 6-Sulfo-3-acetylamino-8-naphthol | orange (474) |
| 61 | 6-Sulfo-2-acetylamino-8-naphthol | rotorange (487) |
| 62 | 1-(4'-Sulfophenyl)-3-methyl-5-pyrazolon | gelb (393) |
| 63 | 3,6,8-Trisulfo-2-amino-naphthalin | orange (460) |
| 64 | 3,6-Disulfo-2-amino-naphthalin | orange (476) |
| 65 | 5,7-Disulfo-2-amino-naphthalin | violett (548) |
| 66 | 6-Sulfo-2-methylamino-8-naphthol | orange (475) |
| 67 | N,N-Bis-(ß-sulfatoethyl)-anilin | gelbbraun (439) |
| 68 | N-Ethyl-N-(ß-sulfatoethyl)-anilin | gelbbraun (457) |
| 69 | 3,6-Disulfo-1-benzoylamino-8-naphthol | rot (510) |
| 70 | 4,6-Disulfo-1-benzoylamino-8-naphthol | rot (509) |
| 71 | N,N-Bis-(ß-sulfatoethyl)-3-chlor-anilin | gelb (449) |
| 72 | 3,6-Disulfo-1-amino-2-{2'-sulfo-4'-[5"-(ß-sulfatoethylsulfonyl)-1",2",3"-benzotriazol-1"-yl]-phenyl-diazoyl}-8-naphthol | marineblau (596) |
| 73 | 3,6-Disulfo-1-amino-2-[4'-(ß-sulfato-ethylsulfonyl)-phenyl-diazoyl]-8-naphthol | marineblau (602) |
| 74 | 5-Sulfo-2-acetylamino-7-naphthol | orange |
| 75 | 3,6-Disulfo-2-acetylamino-8-naphthol | blaust. rot |
| 76 | 2,4-Disulfo-1-amino-8-naphthol | violett |
| 77 | 3,6-Disulfo-1-amino-8-naphthol (in 7-Stellung gekuppelt) | violett |
| 78 | 4,6-Disulfo-1-amino-8-naphthol | violett |
| 79 | 3,6-Disulfo-1-phenylureido-8-naphthol | blaust. rot |
| 80 | 3-Sulfo-1-naphthol | orange |
| 81 | 5-Sulfo-2-naphthol | rot |

| Bsp. | Kupplungskomponente H-K in Formel (B) | Farbton |
|---|---|---|
| 82 | 6-Sulfo-2-naphthol | rot |
| 83 | 8-Sulfo-2-naphthol | rot |
| 84 | 3,6-Disulfo-1-acetylamino-8-naphthol | blaust. rot |
| 85 | 4,6-Disulfo-1-phenylureido-8-naphthol | blaust. rot |
| 86 | 3,6,8-Trisulfo-1-naphthol | rot |
| 87 | 3,6-Disulfo-2-naphthol | rot |
| 88 | 6,8-Disulfo-2-naphthol | orange |
| 89 | 3-Sulfo-acetoactylanilin | gelb |
| 90 | 1-(4'-Sulfophenyl)-3-carbethoxy-5-pyrazolon | gelb |
| 91 | 1-(4'-Sulfophenyl)-3-carboxy-5-pyrazolon | gelb (406) |
| 92 | 1-(2'-Chlor-5'-sulfophenyl)-3-methyl-5-pyrazolon | gelb |
| 93 | 1-(2',5'-Disulfophenyl)-3-methyl-5-pyrazolon | gelb |
| 94 | 1-(4',8'-Disulfo-naphth-2'-yl)-3-methyl-5-pyrazolon | gelb |
| 95 | 1-(4'-Sulfophenyl)-3-methyl-5-amino-pyrazol | gelb |
| 96 | 5-Sulfo-1,4-dimethyl-2-hydroxy-6-pyridon | gelb |
| 97 | 2-Carboxyacetoacetylanilin | gelb |
| 98 | 5-Sulfo-8-hydroxy-chinolin | orange |
| 99 | N-Ethyl-N-(3'-sulfo-benzyl)-anilin | orange |
| 100 | N,N-Bis-(ß-hydroxyethyl)-anilin | orange |
| 101 | 4-Sulfo-diphenylamin | orange |
| 102 | 3,6-Disulfo-1-{4'-chlor-6'-[4"-(ß-sulfatoethylsulfonyl)-phenyl]-amino-1',3',5'-triazin-2-yl}-amino-8-naphthol | blaustichig rot (515) |
| 103 | 3,6-Disulfo-1-[4'-chlor-6'-(3"-sulfophenyl)-amino-1',3',5'-triazin-2-yl]-amino-8-naphthol | blaustichig rot (516) |
| 104 | 3,6-Disulfo-1-{4'-chlor-6'-[4"-(ß-sulfatoethylsulfonyl)-phenyl]-amino-1',3',5'-triazin-2-yl}-amino-8-naphthol | blaustichig rot (515) |

**Beispiel 105**

Eine Lösung mit einem pH-Wert von 6 von 68 Teilen einer auf üblichem Wege durch saure Kupplungsreaktion aus 4-(β-Sulfatoethylsulfonyl)-anilin als Diazokomponente und 1-Amino-8-naphthol-3,6-disulfonsäure

als Kupplungskomponente aufgebauten Azoverbindung wird mit einer gemäß Beispiel 1d) hergestellten Diazoniumsalzlösung von 52 Teilen 2-Amino-4-[2'-amino-4'-(β-sulfatoethylsulfonyl)-phenylamino]-benzolsulfonsäure versetzt, und die zweite Kupplungsreaktion wird unter Einhaltung eines pH-Wertes von 6 bei einer Temperatur zwischen 15 und 20°C durchgeführt.

Die erfindungsgemäße Disazoverbindung wird durch Eindampfen (beispielsweise Sprühtrocknung) der Syntheselösung als dunkelblaues, elektrolythaltiges (natriumchloridhaltiges) Natriumsalz isoliert ; sie besitzt, in Form der freien Säure geschrieben, die Formel

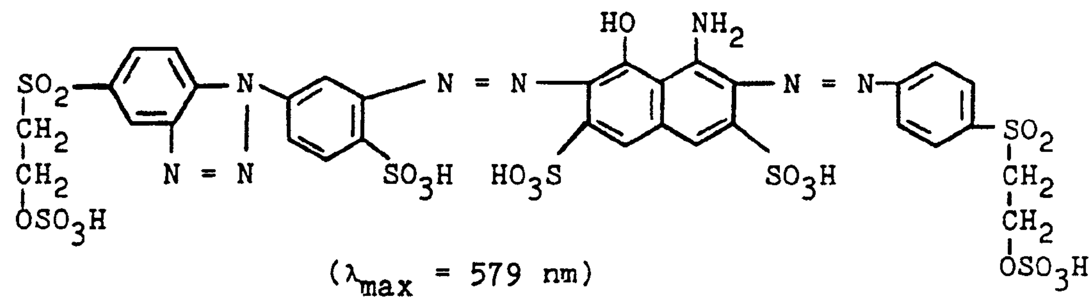

($\lambda_{max}$ = 579 nm)

und zeichnet sich durch sehr gute faserreaktive Farbstoffeigenschaften aus. Sie färbt die in der Beschreibung genannten Fasermaterialien, wie insbesondere Cellulosefasermaterialien, beispielsweise Baumwolle, nach den in der Technik für faserreaktive Farbstoffe üblichen Anwendungsverfahren in farbstarken marineblauen, echten Tönen mit hohem Fixiergrad. Von den guten Echtheitseigenschaften der mit der erfindungsgemäßen Azoverbindung erhältlichen Färbungen und Drucke können insbesondere die guten Chlorwasser-, Licht-, alkalischen und sauren Schweißlicht- und Waschechtheiten bei 60°C und 95°C hervorgehoben werden.

**Beispiele 106 bis 122**

In den nachfolgenden Tabellenbeispielen sind weitere erfindungsgemäße Azoverbindungen entsprechend einer allgemeinen Formel $D^1$-N=N-$K^1$ mit Hilfe deren Komponenten $D^1$ und $K^1$ beschrieben. Sie lassen sich in erfindungsgemäßer Weise, beispielsweise gemäß den obigen Ausführungsbeispielen, durch Kupplung der Kupplungskomponente H-$K^1$ mit dem Diazoniumsalz der Diazokomponente $D^1$-$NH_2$ herstellen und besitzen ebenfalls sehr gute faserreaktive Farbstoffeigenschaften. Sie liefern farbstarke Färbungen und Drucke, wie beispielsweise auf Cellulosefasermaterialien, mit den in dem jeweiligen Tabellenbeispiel angegebenen Farbton (hier auf Baumwolle) mit guten Echtheitseigenschaften ; die im Klammern befindlichen Werte stellen die Absorptionsmaxima ($\lambda_{max}$) in nm dar.

| Bsp. | Rest D$^1$- | Rest -K$^1$ | Farbton |
|---|---|---|---|
| 106 | 2-Sulfo-5-[5'-(ß-sulfatoethylsulfonyl)-1',2',3'-benzotriazol-1'-yl]-phenyl | 3,6-Disulfo-1-amino-2-[2'-sulfo-4'-(ß-sulfatoethylsulfonyl)-phenyl-diazoyl]-8-hydroxy-naphth-7-yl | marineblau |
| 107 | dito | 3,6-Disulfo-1-amino-2-[3'-(ß-sulfatoethylsulfonyl)-phenyl-diazoyl]-8-hydroxy-naphth-7-yl | marineblau |
| 108 | dito | 3,6-Disulfo-1-amino-2-[2'-sulfo-5'-(ß-sulfatoethylsulfonyl)-phenyl-diazoyl]-8-hydroxy-naphth-7-yl | marineblau |
| 109 | 4-(ß-Sulfatoethylsulfonyl)-phenyl | 3,6-Disulfo-1-amino-2-{2'-sulfo-5'-[5"-(ß-sulfatoethylsulfonyl)-1",2",3"-benzotriazol-1"-yl]-phenyl-diazoyl}-8-hydroxy-naphth-7-yl | marineblau |
| 110 | 2-Sulfo-4-(ß-sulfatoethylsulfonyl)-phenyl | dito | marineblau |
| 111 | 3-(ß-Sulfatoethylsulfonyl)-phenyl | dito | marineblau |

| Bsp. | Rest D$^1$- | Rest -K$^1$ | Farbton |
|---|---|---|---|
| 112 | 2-Sulfo-5-(ß-sulfatoethylsulfonyl)-phenyl | dito | marineblau |
| 113 | 2-Sulfo-4-[5'-(ß-sulfatoethylsulfonyl)-1',2',3'-benzotriazol-1'-yl]-phenyl | 3,6-Disulfo-1-amino-2-[2'-sulfo-4'-(ß-sulfatoethylsulfonyl)-phenyl-diazoyl]-8-hydroxy-naphth-7-yl | marineblau (615) |
| 114 | dito | 3,6-Disulfo-1-amino-2-[3'-(ß-sulfatoethylsulfonyl)-phenyl-diazoyl]-8-hydroxy-naphth-7-yl | marineblau (595) |
| 115 | dito | 3,6-Disulfo-1-amino-2-[2'-sulfo-5'-(ß-sulfatoethylsulfonyl)-phenyl-diazoyl]-8-hydroxy-naphth-7-yl | marineblau |
| 116 | 4-(ß-Sulfatoethylsulfonyl)-phenyl | 3,6-Disulfo-1-amino-2-{2'-sulfo-4'-[5"-(ß-sulfatoethylsulfonyl)-1",2",3"-benzotriazol-1"-yl]-phenyl-diazoyl}-8-hydroxy-naphth-7-yl | marineblau (607) |
| 117 | 2-Sulfo-4-(ß-sulfatoethylsulfonyl)-phenyl | dito | marineblau (606) |
| 118 | 3-(ß-Sulfatoethylsulfonyl)-phenyl | dito | marineblau |
| 119 | 2-Sulfo-5-(ß-sulfatoethylsulfonyl)-phenyl | dito | marineblau |
| 120 | 2-Sulfo-4-[5'-(ß-sulfatoethylsulfonyl)-1',2',3'-benzotriazol-1'-yl]-phenyl | dito | marineblau |
| 121 | 2-Sulfo-5-[5'-(ß-sulfatoethylsulfonyl)-1',2',3'-benzotriazol-1'-yl]-phenyl | dito | marineblau |
| 122 | 2-Sulfo-4-[5'-(ß-sulfatoethylsulfonyl)-1',2',3'-benzotriazol-1'-yl]-phenyl | 3,6-Disulfo-1-amino-2-{2'-sulfo-5'-[5"-(ß-sulfatoethylsulfonyl)-1",2",3"-benzotriazol-1"-yl]-phenyl-diazoyl}-8-hydroxy-naphth-7-yl | marineblau |

## Ansprüche

**Patentansprüche : für die Vertragsstaaten : BE CH DE FR GB IT LI**

1. Eine wasserlösliche Azoverbindung, die der allgemeinen Formel (1)

$$D-N=N-K \quad (1)$$

entspricht, in welcher bedeuten :
D ist ein Rest der allgemeinen Formel (2)

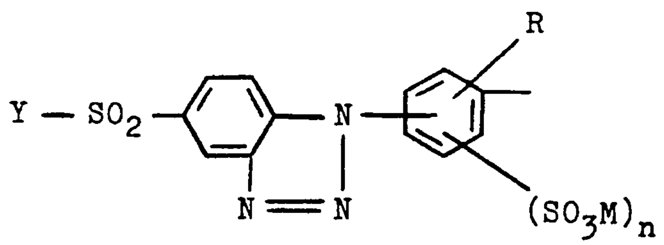

(2)

in welcher
Y die Vinylgruppe bedeutet oder eine Gruppe der allgemeinen Formel (3)

$$-CH_2-CH_2-X \quad (3)$$

in welcher
X ein Substituent ist,
der durch ein Alkali unter Bildung der Vinylgruppe eliminierbar ist,
R ein Wasserstoffatom oder eine Hydroxygruppe, eine Alkylgruppe von 1 bis 4 C-Atomen, eine Alkoxygruppe von 1 bis 4 C-Atomen, eine Carboxygruppe oder ein Halogenatom ist,
n für die Zahl Null oder 1 steht,
M ein Wasserstoffatom oder ein salzbildendes Metallatom, wie insbesondere ein Alkalimetallatom, ist und die freie Bindung vom Benzolkern zur Azogruppe sich in meta- oder para-Stellung zu dem einen Stickstoffatom des Benztriazolrestes gebunden ist ;
K ist ein Rest einer einfach ankuppelbaren wasserlöslichen Kupplungskomponente, die noch eine Azogruppe enthalten kann, oder der Rest einer doppelankuppelbaren wasserlöslichen Kupplungskomponente, jeweils aus der Reihe der Aminobenzole, der Phenole, insbesondere deren Sulfonsäuren und Carbonsäuren, der Naphthole, insbesondere deren Sulfonsäuren, der Aminonaphthole, insbesondere deren Sulfonsäuren, der Acylamino-naphthole, insbesondere deren Sulfonsäuren, mit dem Acylrest einer Alkan- oder Alkencarbonsäure mit jeweils 1 bis 4 bzw. 2 bis 4 C-Atomen im Alkyl- bzw. Alkenylrest oder einer aromatischen Carbonsäure oder einer aromatischen Sulfonsäure oder der N-substituierten Carbaminsäure oder aus der Reihe der Dihydroxynaphthalinsulfonsäuren, der Phenylazo- und Naphthylazo-aminonaphtholsulfonsäuren, der 5-Pyrazolone und 5-Aminopyrazole, der Acetoacetylarylide, der 2-Hydroxy-6-pyridone und der Hydroxychinoline.

2. Verbindung nach Anspruch 1, dadurch gekennzeichnet, daß K ein Rest der allgemeinen Formel

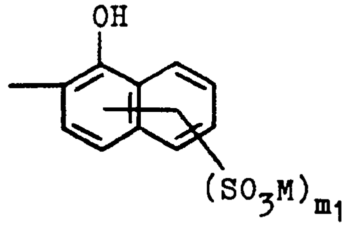

ist, in welcher $m_1$ für die Zahl 1, 2 oder 3 steht.

3. Verbindung nach Anspruch 1, dadurch gekennzeichnet, daß K ein Rest der allgemeinen Formel

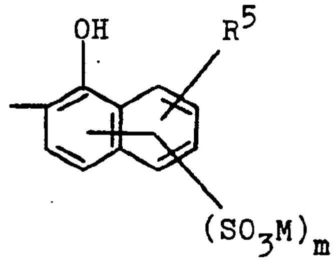

ist, in welcher $R^5$ die Benzoylaminogruppe oder eine Alkanoylaminogruppe von 2 bis 5 C-Atomen ist und m für die Zahl 1 oder 2 steht.

4. Verbindung nach Anspruch 1, dadurch gekennzeichnet, daß K ein Rest der allgemeinen Formel

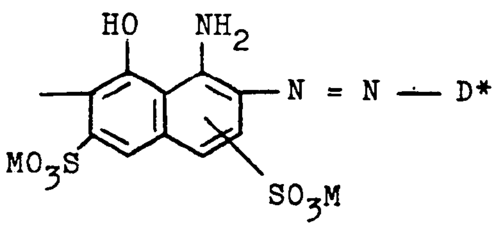

ist, in welcher D* ein Rest der allgemeinen Formel

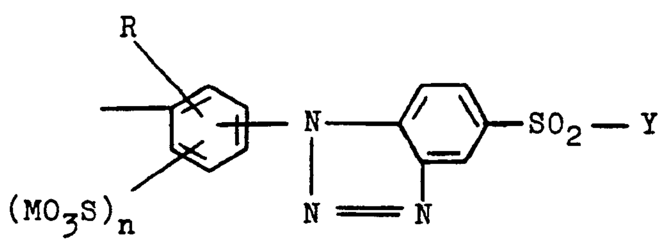

ist, worin R, M, n und Y eine der in Anspruch 1 genannten Bedeutungen haben.

5. Verbindung nach Anspruch 1, dadurch gekennzeichnet, daß K ein Rest der allgemeinen Formel

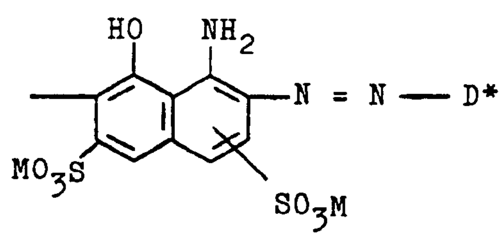

ist, in welcher M eine der in Anspruch 1 genannten Bedeutungen besitzt und D* ein Phenylrest ist, der durch 1, 2 oder 3 Substituenten aus der Gruppe Alkyl von 1 bis 4 C-Atomen, Alkoxy von 1 bis 4 C-Atomen, Chlor, Brom, Hydroxy, Carboxy, Sulfo, Carbamoyl, Sulfamoyl und Alkanoylamino von 2 bis 5 C-Atomen und/oder durch eine Gruppe der allgemeinen Formel $-SO_2-Y$ mit Y einer in Anspruch 1 genannten Bedeutung substituiert sein kann, oder ein Naphthylrest ist, der durch 1, 2 oder 3 Sulfogruppen oder durch 1 oder 2 Sulfogruppen und 1 oder 2 Gruppen der allgemeinen Formel $-SO_2-Y$ mit Y einer in Anspruch 1 genannten Bedeutung oder nur durch eine solche Gruppe $-SO_2-Y$ substituiert ist.

6. Verbindung nach mindestens einem der Ansprüche 1 bis 5, dadurch gekennzeichnet, daß n für die Zahl 1 steht.

7. Verbindung nach mindestens einem der Ansprüche 1 bis 6, dadurch gekennzeichnet, daß R ein Wasserstoffatom bedeutet.

8. Verbindung nach mindestens einem der Ansprüche 1 bis 7, dadurch gekennzeichnet, daß Y für die Vinylgruppe oder eine β-Sulfatoethyl-Gruppe steht.

9. Verbindung nach mindestens einem der Ansprüche 1 bis 8, dadurch gekennzeichnet, daß Y eine β-Sulfatoethyl-Gruppe ist.

10. Verbindung nach mindestens einem der Ansprüche 1 bis 9, dadurch gekennzeichnet, daß M für ein Wasserstoffatom oder ein Alkalimetall steht.

11. Verfahren zur Herstellung einer Verbindung der in Anspruch 1 genannten und definierten allgemeinen Formel (1), dadurch gekennzeichnet, daß man eine Diazoniumverbindung der allgemeinen Formel (4)

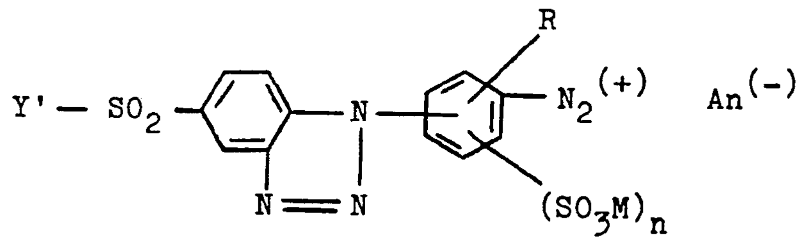

(4)

in welcher R, M und n die in Anspruch 1 genannten Bedeutungen haben, Y' eine der Bedeutungen von Y besitzt oder die β-Hydroxyethylgrppe ist, $An^{(-)}$ für ein Anion steht und die Diazoniumgruppe in meta- oder para-Stellung zu dem einen Stickstoffatom des Benztriazolrestes gebunden ist, mit einer Kupplungskomponente der allgemeinen Formel H-K mit K der in Anspruch 1 genannten Bedeutung kuppelt und gegebenenfalls die gebildete Azoverbindung mit einer weiteren Diazoverbindung oder Kupplungskomponente umsetzt und gegebenenfalls die Gruppe Y', sofern sie für eine β-Hydroxyethyl-Gruppe stand, anschließend in eine Gruppe Y überführt.

12. Abänderung des Verfahrens nach Anspruch 11, dadurch gekennzeichnet, daß man eine Aminoverbindung der allgemeinen Formel (5)

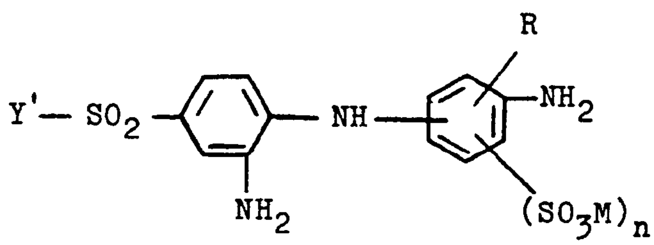

(5)

in welcher Y', R, M und n die in Anspruch 11 genannten Bedeutungen haben und die sekundäre Aminogruppe in meta- oder para-Stellung zur primären Aminogruppe gebunden ist, mit der zweifach äquimolaren Menge eines Diazotierungsagenzes umsetzt und die gebildete Diazoniumverbindung der Aminoverbindung entsprechend der allgemeinen Formel (4) in der in Anspruch 11 angegebenen Weise weiter umsetzt.

13. Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

14. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.

15. Eine Verbindung, die der allgemeinen Formel (7)

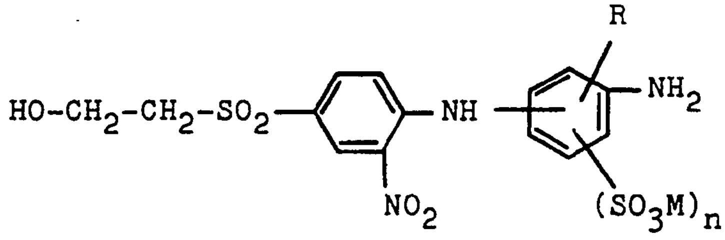

(7)

entspricht, in welcher R ein Wasserstoffatom oder eine Hydroxygruppe, eine Alkylgruppe von 1 bis 4 C-Atomen, eine Alkoxygruppe von 1 bis 4 C-Atomen, eine Carboxygruppe oder ein Halogenatom ist, n für die Zahl Null, 1 oder 2 steht und M ein Wasserstoffatom oder ein salzbildendes Metallatom, wie insbesondere ein Alkalimetallatom, ist und die sekündäre Aminogruppe in meta- oder para-Stellung zur primären Aminogruppe gebunden ist.

16. Eine Verbindung, die der allgemeinen Formel (5)

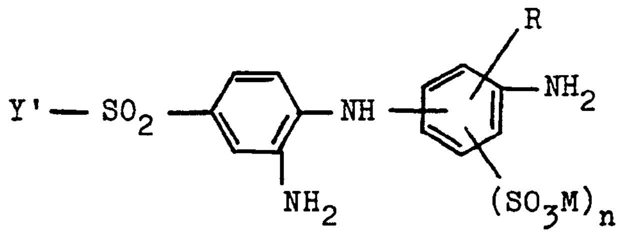

(5)

entspricht, in welcher Y' die Vinylgruppe, die β-Hydroxyethyl-Gruppe oder eine Ethylgruppe mit einem in β-Stellung befindlichen, alkalisch eliminierbaren Substituenten ist, R ein Wasserstoffatom, eine Hydroxygruppe, eine Alkylgruppe von 1 bis 4 C-Atomen, eine Alkoxygruppe von 1 bis 4 C-Atomen, eine Carboxygruppe oder ein Halogenatom ist, n für die Zahl Null, 1 oder 2 steht und M ein Wasserstoffatom oder ein salzbildendes Metallatom, wie insbesondere ein Alkalimetallatom, ist und die sekundäre Aminogruppe in meta- oder para-Stellung zur primären Aminogruppe gebunden ist.

17. Eine Diazoniumverbindung, die der allgemeinen Formel (4)

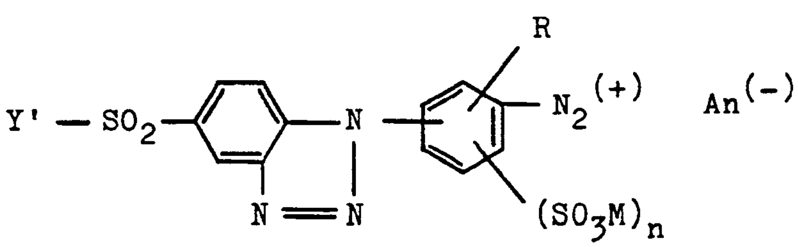

(4)

entspricht, in welcher Y' die Vinylgruppe, die β-Hydroxyethyl-Gruppe oder eine Ethylgruppe mit einem in β-Stellung befindlichen, alkalisch eliminierbaren Substituenten ist, R ein Wasserstoffatom, eine Hydroxygruppe, eine Alkylgruppe von 1 bis 4 C-Atomen, eine Alkoxygruppe von 1 bis 4 C-Atomen, eine Carboxygruppe oder ein Halogenatom ist, n für die Zahl Null, 1 oder 2 steht und M ein Wasserstoffatom oder ein salzbildendes Metallatom, wie insbesondere ein Alkalimetallatom, ist, $An^{(-)}$ für ein Anion steht und die Diazoniumgruppe in meta- oder para-Stellung zu dem einen Stickstoffatom des Benztriazolrestes gebunden ist.

18. Verbindung nach mindestens einem der Ansprüche 15 bis 17, dadurch gekennzeichnet, daß n für die Zahl 1 steht.

19. Verbindung nach mindestens einem der Ansprüche 15 bis 18, dadurch gekennzeichnet, daß R für ein Wasserstoffatom steht.

20. Verfahren zur Herstellung einer Verbindung von Anspruch 15 oder von Anspruch 16 oder von Anspruch 17, dadurch gekennzeichnet, daß man 2-Chlor-5-(β-hydroxyethylsulfonyl)-nitrobenzol mit einer Verbindung der allgemeinen Formel (6)

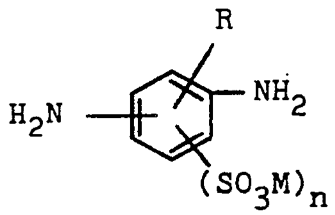

(6)

in welcher R, M und n eine der in den Ansprüchen 15 bis 19 genannten Bedeutungen haben und die beiden primären Aminogruppen in meta- oder para-Stellung zueinander an den Benzolkern gebunden sind, umsetzt und gewünschtenfalls die so gebildete Verbindung von Anspruch 15 zur Verbindung von Anspruch 16 reduziert und gewünschtenfalls die Verbindung von Anspruch 16 mit einem Diazotierungsagenz zur Diazoniumverbindung von Anspruch 17 umsetzt und gewünschtenfalls in den Verbindungen von Anspruch 16 die für den Formelrest Y' stehende β-Hydroxyethyl-Gruppe in eine andere Gruppe Y' überführt.

21. Verwendung einer Verbindung entsprechend der allgemeinen Formel (7) von Anspruch 15 oder einer Verbindung entsprechend der allgemeinen Formel (5) von Anspruch 16 oder einer Diazoniumverbindung entsprechend der allgemeinen Formel (4) von Anspruch 17 zur Synthese von Farbstoffen, insbesondere von Azofarbstoffen.

**Patentansprüche für den Vertragsstaat : ES**

1. Verfahren zur Herstellung einer wasserlöslichen Azoverbindung, die der allgemeinen Formel (1)

$$D-N=N-K \quad (1)$$

entspricht, in welcher bedeuten :
D ist ein Rest der allgemeinen Formel (2)

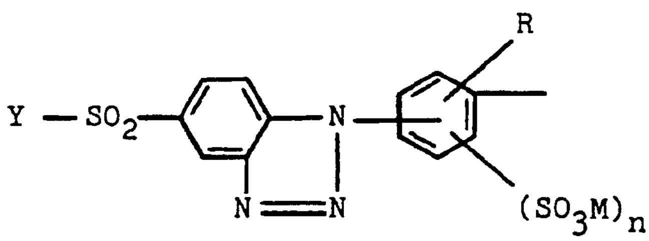

(2)

in welcher
Y die Vinylgruppe bedeutet oder eine Gruppe der allgemeinen Formel (3)

$$-CH_2-CH_2-X \quad (3)$$

in welcher
X ein Substituent ist,
der durch ein Alkali unter Bildung der Vinylgruppe eliminierbar ist,
R ein Wasserstoffatom oder eine Hydroxygruppe, eine Alkylgruppe von 1 bis 4 C-Atomen, eine Alkoxygruppe von 1 bis 4 C-Atomen, eine Carboxygruppe oder ein Halogenatom ist,
n für die Zahl Null oder 1 steht,
M ein Wasserstoffatom oder ein salzbildendes Metallatom, wie insbesondere ein Alkalimetallatom, ist und die freie Bindung vom Benzolkern zur Azogruppe sich in meta- oder para-Stellung zu dem einen Stickstoffatom des Benztriazolrestes gebunden ist ;
K ist ein Rest einer einfach ankuppelbaren wasserlöslichen Kupplungskomponente, die noch eine Azogruppe enthalten kann, oder der Rest einer doppelankuppelbaren wasserlöslichen Kupplungskomponente, jeweils aus der Reihe der Aminobenzole, der Phenole, insbesondere deren Sulfonsäuren und Carbonsäuren, der Naphthole, insbesondere deren Sulfonsäuren, der Aminonaphthole, insbesondere deren Sulfonsäuren, der Acylamino-naphthole, insbesondere deren Sulfonsäuren, mit dem Acylrest einer Alkan- oder Alkencarbonsäure mit

jeweils 1 bis 4 bzw. 2 bis 4 C-Atomen im Alkyl- bzw. Alkenylrest oder einer aromatischen Carbonsäure oder einer aromatischen Sulfonsäure oder der N-substituierten Carbaminsäure oder aus der Reihe der Dihydroxynaphthalinsulfonsäuren, der Phenylazo- und Naphthylazo-aminonaphtholsulfonsäuren, der 5-Pyrazolone und 5-Aminopyrazole, der Acetoacetylarylide, der 2-Hydroxy-6-pyridone und der Hydroxychinoline, dadurch gekennzeichnet, daß man eine Diazoniumverbindung der allgemeinen Formel (4)

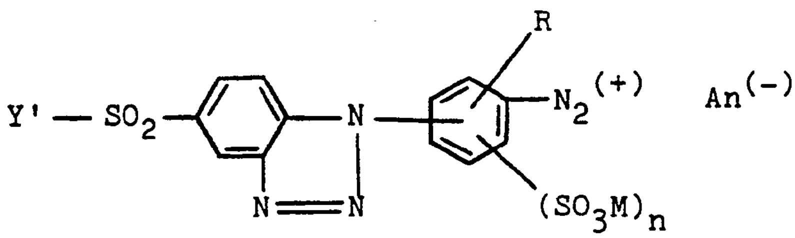

(4)

in welcher R, M und n die oben genannten Bedeutungen haben, Y′ eine der Bedeutungen von Y besitzt oder die β-Hydroxyethylgrppe ist, $An^{(-)}$ für ein Anion steht und die Diazoniumgruppe in meta- oder para-Stellung zu dem einen Stickstoffatom des Benztriazolrestes gebunden ist, mit einer Kupplungskomponente der allgemeinen Formel H-K mit K der oben genannten Bedeutung kuppelt und gegebenenfalls die gebildete Azoverbindung mit einer weiteren Diazoverbindung oder Kupplungskomponente umsetzt und gegebenenfalls die Gruppe Y′, sofern sie für eine β-Hydroxyethyl-Gruppe stand, anschließend in eine Gruppe Y überführt.

2. Abänderung des Verfahrens nach Anspruch 1, dadurch gekennzeichnet, daß man eine Aminoverbindung der allgemeinen Formel (5)

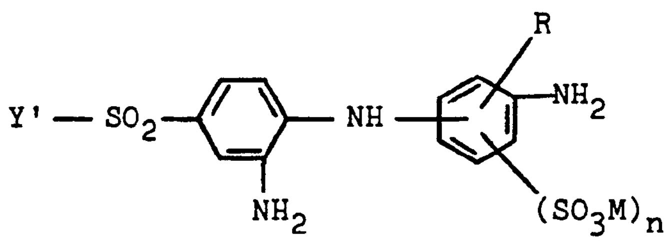

(5)

in welcher Y′, R, M und n die in Anspruch 1 genannten Bedeutungen haben und die sekundäre Aminogruppe in meta- oder para-Stellung zur primären Aminogruppe gebunden ist, mit der zweifach äquimolaren Menge eines Diazotierungsagenzes umsetzt und die gebildete Diazoniumverbindung der Aminoverbindung entsprechend der allgemeinen Formel (4) in der in Anspruch 1 angegebenen Weise weiter umsetzt.

3. Verfahren nach Anspruch 1 oder 2, dadurch gekennzeichnet, daß K ein Rest der allgemeinen Formel

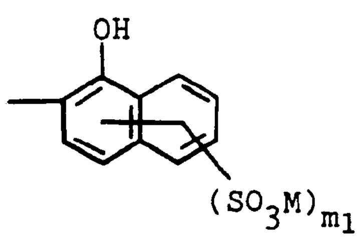

ist, in welcher $m_1$ für die Zahl 1, 2 oder 3 steht.

4. Verfahren nach Anspruch 1 oder 2, dadurch gekennzeichnet, daß K ein Rest der allgemeinen Formel

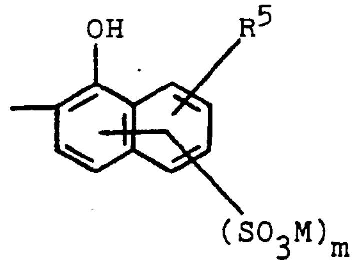

ist, in welcher $R^5$ die Benzoylaminogruppe oder eine Alkanoylaminogruppe von 2 bis 5 C-Atomen ist und m für die Zahl 1 oder 2 steht.

5. Verfahren nach Anspruch 1 oder 2, dadurch gekennzeichnet, daß K ein Rest der allgemeinen Formel

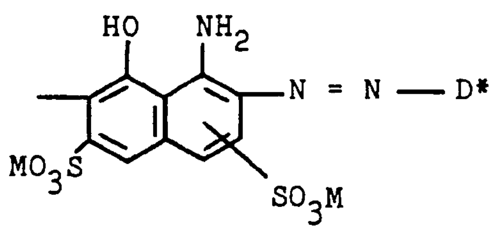

ist, in welcher D* ein Rest der allgemeinen Formel

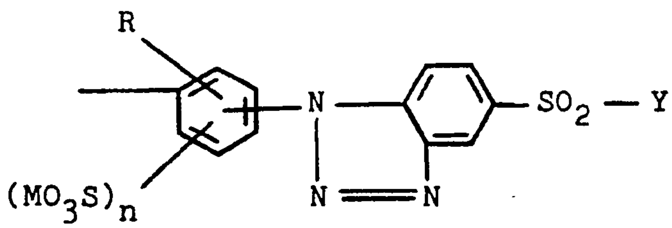

ist, worin R, M, n und Y eine der in Anspruch 1 genannten Bedeutungen haben.

6. Verfahren nach Anspruch 1 oder 2, dadurch gekennzeichnet, daß K ein Rest der allgemeinen Formel

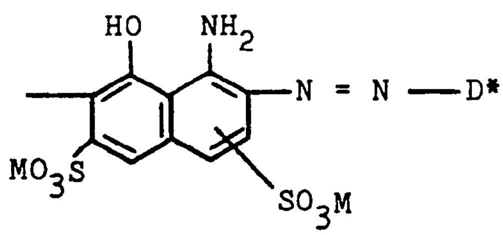

ist, in welcher M eine der in Anspruch 1 genannten Bedeutungen besitzt und D* ein Phenylrest ist, der durch 1, 2 oder 3 Substituenten aus der Gruppe Alkyl von 1 bis 4 C-Atomen, Alkoxy von 1 bis 4 C-Atomen, Chlor, Brom, Hydroxy, Carboxy, Sulfo, Carbamoyl, Sulfamoyl und Alkanoylamino von 2 bis 5 C-Atomen und/oder durch eine Gruppe der allgemeinen Formel $-SO_2-Y$ mit Y einer in Anspruch 1 genannten Bedeutung substituiert sein kann, oder ein Naphthylrest ist, der durch 1, 2 oder 3 Sulfogruppen oder durch 1 oder 2 Sulfogruppen und 1 oder 2 Gruppen der allgemeinen Formel $-SO_2-Y$ mit Y einer in Anspruch 1 genannten Bedeutung oder nur durch eine solche Gruppe $-SO_2-Y$ substituiert ist.

7. Verbindung nach mindestens einem der Ansprüche 1 bis 6, dadurch gekennzeichnet, daß n für die Zahl 1 steht.

8. Verbindung nach mindestens einem der Ansprüche 1 bis 7, dadurch gekennzeichnet, daß R ein Wasserstoffatom bedeutet.

9. Verbindung nach mindestens einem der Ansprüche 1 bis 8, dadurch gekennzeichnet, daß Y für die Vinylgruppe oder eine β-Sulfatoethyl-Gruppe steht.

10. Verbindung nach mindestens einem der Ansprüche 1 bis 9, dadurch gekennzeichnet, daß Y eine β-Sulfatoethyl-Gruppe ist.

11. Verbindung nach mindestens einem der Ansprüche 1 bis 10, dadurch gekennzeichnet, daß M für ein Wasserstoffatom oder ein Alkalimetall steht.

12. Verwendung einer Verbindung entsprechend der Formel (1) von Anspruch 1 zum Färben (einschließlich Bedrucken) von hydroxy- und/oder carbonamidgruppenhaltigem Material, insbesondere Fasermaterial.

13. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der Formel (1) von Anspruch 1 einsetzt.

14. Verfahren zur Herstellung einer Verbindung, die der allgemeinen Formel (7)

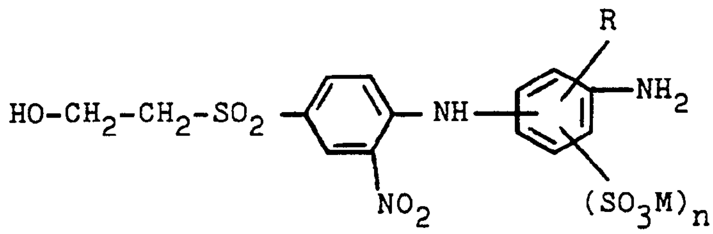

(7)

entspricht, in welcher R ein Wasserstoffatom oder eine Hydroxygruppe, eine Alkylgruppe von 1 bis 4 C-Atomen, eine Alkoxygruppe von 1 bis 4 C-Atomen, eine Carboxygruppe oder ein Halogenatom ist, n für die Zahl Null, 1 oder 2 steht und M ein Wasserstoffatom oder ein salzbildendes Metallatom, wie insbesondere ein Alkalimetallatom, ist und die sekundäre Aminogruppe in meta- oder para-Stellung zur primären Aminogruppe gebunden ist,

oder zur Herstellung einer Verbindung, die der allgemeinen Formel (5)

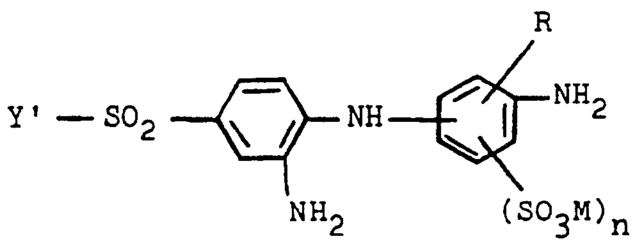

(5)

entspricht, in welcher Y′ die Vinylgruppe, die β-Hydroxyethyl-Gruppe oder eine Ethylgruppe mit einem in β-Stellung befindlichen, alkalisch eliminierbaren Substituenten ist, R ein Wasserstoffatom, eine Hydroxygruppe, eine Alkylgruppe von 1 bis 4 C-Atomen, eine Alkoxygruppe von 1 bis 4 C-Atomen, eine Carboxygruppe oder ein Halogenatom ist, n für die Zahl Null, 1 oder 2 steht und M ein Wasserstoffatom oder ein salzbildendes Metallatom, wie insbesondere ein Alkalimetallatom, ist und die sekundäre Aminogruppe in meta- oder para-Stellung zur primären Aminogruppe gebunden ist,

oder zur Herstellung einer Diazoniumverbindung, die der allgemeinen Formel (4)

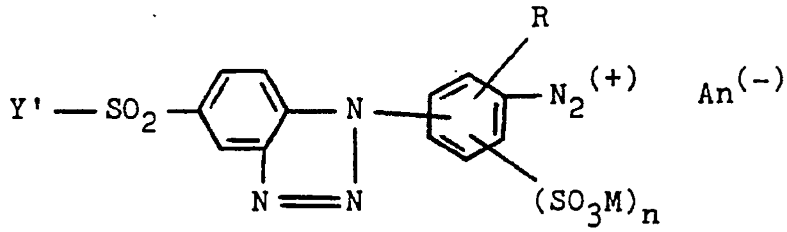

(4)

entspricht, in welcher Y' die Vinylgruppe, die β-Hydroxyethyl-Gruppe oder eine Ethylgruppe mit einem in β-Stellung befindlichen, alkalisch eliminierbaren Substituenten ist, R ein Wasserstoffatom, eine Hydroxygruppe, eine Alkylgruppe von 1 bis 4 C-Atomen, eine Alkoxygruppe von 1 bis 4 C-Atomen, eine Carboxygruppe oder ein Halogenatom ist, n für die Zahl Null, 1 oder 2 steht und M ein Wasserstoffatom oder ein salzbildendes Metallatom, wie insbesondere ein Alkalimetallatom, ist, $An^{(-)}$ für ein Anion steht und die Diazoniumgruppe in meta- oder para-Stellung zu dem einen Stickstoffatom des Benztriazolrestes gebunden ist,
dadurch gekennzeichnet, daß man 2-Chlor-5-(β-hydroxyethylsulfonyl)-nitrobenzol mit einer Verbindung der allgemeinen Formel (6)

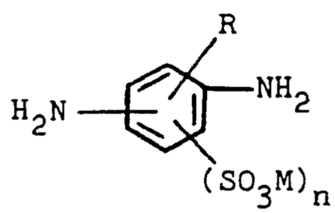

(6)

in welcher R, M und n eine der in Anspruch 14 genannten Bedeutungen haben und die beiden primären Aminogruppen in meta- oder para-Stellung zueinander an den Benzolkern gebunden sind, umsetzt und gewünschtenfalls die so gebildete Verbindung der Formel (7) mit Y' gleich β-Hydroxyethyl zur Verbindung der Formel (5) mit Y' gleich β-Hydroxyethyl reduziert und gewünschtenfalls die Verbindung der Formel (5) mit Y' gleich β-Hydroxyethyl mit einem Diazotierungsagenz zur Diazoniumverbindung der Formel (4) mit Y' gleih β-Hydroxyethyl umsetzt und gewünschtenfalls in den Verbindungen der Formeln (7), (5) und (4) die für den Formelrest Y' stehende β-Hydroxyethyl-Gruppe in eine andere Gruppe Y' überführt.

15. Verfahren nach Anspruch 14, dadurch gekennzeichnet, daß n für die Zahl 1 steht.

16. Verfahren nach Anspruch 14 oder 15, dadurch gekennzeichnet, daß R für ein Wasserstoffatom steht.

17. Verwendung einer Verbindung der allgemeinen Formel (7) oder einer Verbindung der allgemeinen Formel (5) oder einer Diazoniumverbindung der allgemeinen Formel (4) von Anspruch 14 zur Synthese von Farbstoffen, insbesondere von Azofarbstoffen.

**Revendications**

**Revendications pour les Etats Contractants : BE CH DE FR GB IT LI**

1. Composé azoïque hydrosoluble qui répond à la formule générale (1) :

$$D-N=N-K \quad (1)$$

dans laquelle :
D représente un radical répondant à la formule générale (2) :

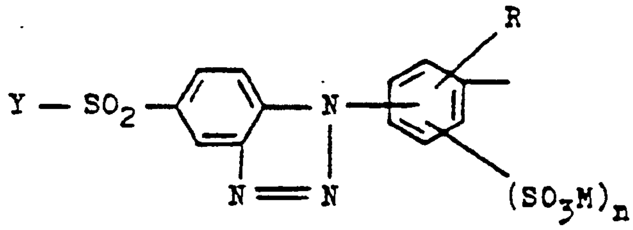

(2)

dans laquelle
Y représente un radical vinyle ou un radical de formule générale (3) :

$$- CH_2\text{-}CH_2\text{-}X \quad (3)$$

dans laquelle
X représente un substituant susceptible d'être éliminé par un alcali en engendrant le radical vinyle,
R représente un atome d'hydrogène, un radical hydroxy, un radical alkyle contenant de 1 à 4 atomes de carbone, un radical alcoxy contenant de 1 à 4 atomes de carbone, un radical carboxy ou un atome d'halogène,
n désigne un nombre égal à zéro ou à 1,
M représente un atome d'hydrogène ou un atome de métal formant un sel, en particulier un atome de métal alcalin, et
la liaison libre du noyau benzénique (vers le radical azo) est en position méta ou para relativement à l'un des atomes d'azote du radical benzotriazolique, et
K représente un radical d'un copulant hydrosoluble qui est capable de copuler une fois et qui peut contenir encore un radical azo, ou représente un radical d'un copulant hydrosoluble capable de copuler deux fois, chacun de ces copulants appartenant à la série des aminobenzènes, des phénols, en particulier de leurs acides sulfoniques et de leurs acides carboxyliques, des naphtols, en particulier de leurs acides sulfoniques, des aminonaphtols, en particulier de leurs acides sulfoniques, des alcylaminonaphtols, en particulier de leurs acides sulfoniques, à radical acyle dérivant d'un acide alcane-carboxylique ou alcène-carboxylique contenant respectivement de 1 à 4, ou de 2 à 4, atomes de carbone dans la partie alkyle ou alcényle, d'un acide carboxylique aromatique, ou d'un acide carbamique substitué à l'azote, ou à la série des acides dihydroxy-naphtalène-sulfoniques, des acides phénylazo- et naphtylazo-aminonaphtol-sulfoniques, des pyrazolones-5 et amino-5 pyrazoles, des acétoacétylarylides, des hydroxy-2 pyridones-6 et des hydroxyquinoléines.

2. Composé selon la revendication 1, caractérisé en ce que K représente un radical répondant à la formule générale :

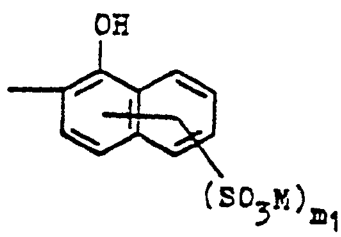

dans laquelle $m_1$ est égal à 1, à 2 ou à 3.

3. Composé selon la revendication 1, caractérisé en ce que K représente un radical répondant à la formule générale :

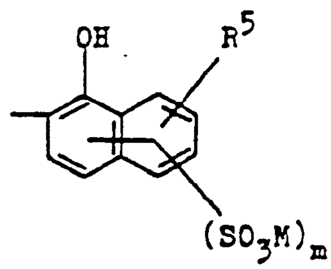

dans laquelle $R^5$ représente un radical benzoylamino ou un radical alcanoylamino contenant de 2 à 5 atomes de carbone, et m est égal à 1 ou à 2.

4. Composé selon la revendication 1, caractérisé en ce que K représente un radical répondant à la formule générale :

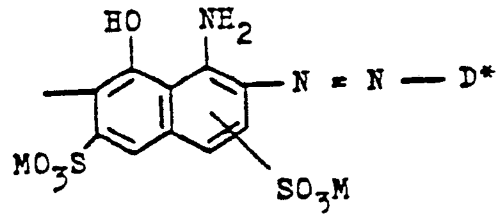

dans laquelle D* représente un radical de formule générale :

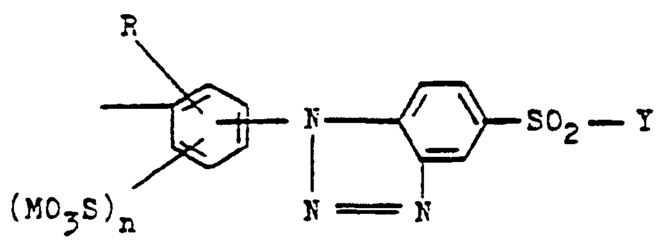

où R, M, n et Y ont les significations indiquées à la revendication 1.

5. Composé selon la revendication 1, caractérisé en ce que K représente un radical répondant à la formule générale :

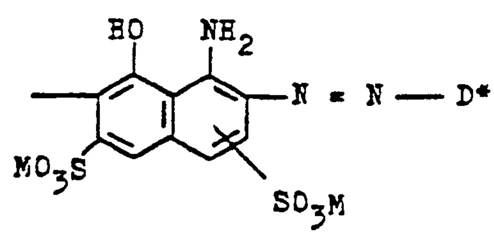

dans laquelle
M a l'une des significations indiquées à la revendication 1
et
D* représente

– un radical phényle éventuellement porteur de 1, de 2 ou de 3 substituants pris dans l'ensemble constitué par les alkyles en $C_1$-$C_4$, les alcoxy en $C_1$-$C_4$ , le chlore, le brome, l'hydroxy, le carboxy, le sulfo, les carbamoyle, le sulfamoyle et les alcanoylamino en $C_2$-$C_5$, et/ou porteur d'un radical de formule générale – SO2-Y dans lequel Y a l'une des significations indiquées à la revendication 1, ou

– un radical naphtyle qui porte 1, 2 ou 3 radicaux sulfo, ou 1 ou 2 radicaux sulfo et 1 ou 2 radicaux répondant à la formule générale –SO2-Y dans laquelle Y a l'une des significations indiquées à la revendication 1, ou seulement un tel radical –SO2-Y.

6. Composé selon au moins une des revendications 1 à 5, caractérisé en ce que n est égal à 1.

7. Composé selon au moins une des revendications 1 à 6, caractérisé en ce que R représente un atome d'hydrogène.

8. Composé selon au moins une des revendications 1 à 7, caractérisé en ce que Y représente un radical vinyle ou un radical sulfato-2 éthyle.

9. Composé selon au moins une des revendications 1 à 8, caractérisé en ce que Y représente un radical sulfato-2 éthyle.

10. Composé selon au moins une des revendications 1 à 9, caractérisé en ce que M représente un atome d'hydrogène ou un métal alcalin.

11. Procédé pour préparer un composé répondant à la formule générale (1) qui a été représentée et définie à la revendication 1, procédé caractérisé en ce qu'on copule un composé diazoïque répondant à la formule générale (4) :

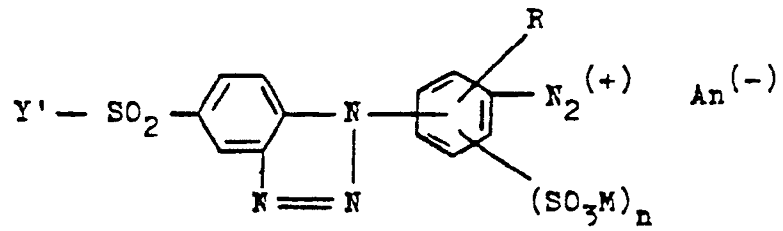
(4)

dans laquelle R, M et n ont les significations indiquées à la revendication 1, Y' a l'une des significations de Y ou représente un radical hydroxy-2 éthyle, An(–) représente un anion, et le radical diazonium se trouve en position méta ou para par rapport à un atome d'azote du radical benzotriazolique,
avec un copulant répondant à la formule générale H-K dans laquelle K a la signification indiquée à la revendication 1, on fait réagir éventuellement le composé azoïque formé avec un autre composé diazoïque ou un autre copulant, puis on transforme éventuellement le radical Y', lorsqu'il renprésente un radical hydroxy-2 éthyle, en un radical Y.

12. Variante du procédé selon la revendication 11, variante caractérisée en ce qu'on fait réagir un composé aminé répondant à la formule générale (5)

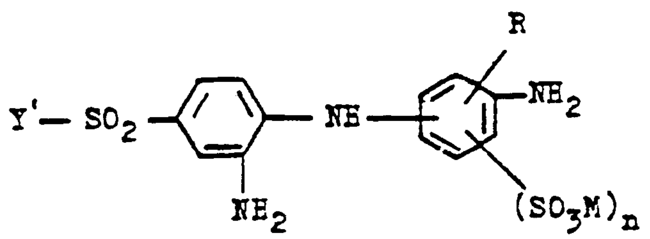
(5)

dans laquelle Y', R, M et n ont les significations indiquées à la revendication 11, et le radical amino secondaire se trouve en position méta ou para relativement au radical amino primaire,
avec deux fois la quantité équimolaire d'un agent de diazotation, et on continue à faire réagir le composé de diazonium formé, c'est-à-dire le composé de diazonium du composé aminé de formule générale (4), de la manière décrite à la revendication 11.

13. Application d'un composé de formule générale (1) selon la revendication 1 à la teinture (y compris l'impression) d'une matière contenant des radicaux hydroxy et/ou carbamoyles, plus particulièrement d'une matière fibreuse de ce genre.

14. Procédé pour teindre (y compris imprimer) une matière contenant des radicaux hydroxy et/ou carbamoyles, plus particulièrement une matière fibreuse de ce genre, selon lequel on applique un colorant sur la matière, ou on introduit un colorant dans la matière, et on le fixe au moyen de la chaleur et/ou au moyen d'un agent alcalin, procédé caractérisé en ce qu'on utilise, comme colorant, un composé de formule générale (1) selon la revendication 1.

15. Composé répondant à la formule générale (7) :

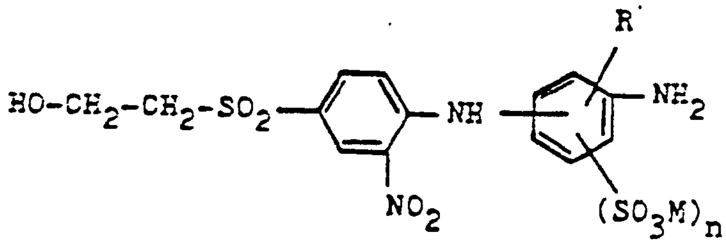

(7)

dans laquelle
R représente un atome d'hydrogène, un radical hydroxy, un radical alkyle en $C_1$-$C_4$, un radical alcoxy en $C_1$-$C_4$, un radical carboxy ou un atome d'halogène,
n désigne un nombre égal à zéro, à 1 ou à 2, et
M représente un atome d'hydrogène ou un atome de métal apte à former un sel, en particulier un atome de métal alcalin,
et dans laquelle le radical amino secondaire se trouve en position méta ou para relativement au radical amino primaire.

16. Composé répondant à la formule générale (5) :

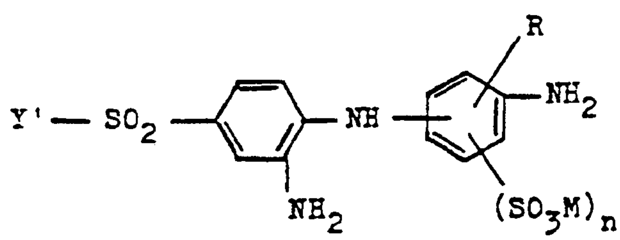

(5)

dans laquelle
Y' représente un radical vinyle ou hydroxy-2 éthyle ou un radical éthyle portant, en sa position 2, un substituant éliminable en milieu alcalin,
R représente un atome d'hydrogène, un radical hydroxy, un radical alkyle en $C_1$-$C_4$, un radical alcoxy en $C_1$-$C_4$, un radical carboxy ou un atome d'halogène,
n désigne un nombre égal à zéro, à 1 ou à 2, et
M représente un atome d'hydrogène ou un atome de métal apte à former un sel, en particulier un atome de métal alcalin,
et dans laquelle le radical amino secondaire se trouve en position méta ou para relativement au radical amino primaire.

17. Composé de diazonium répondant à la formule générale (4) :

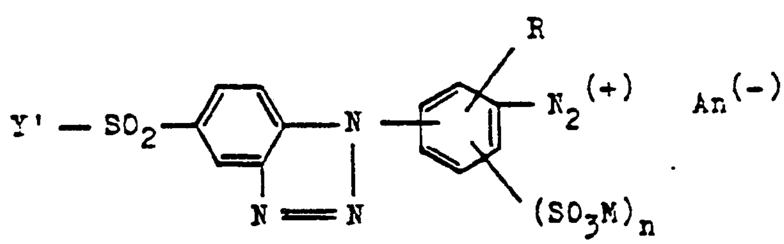

(4)

dans laquelle
Y' représente un radical vinyle ou hydroxy-2 éthyle ou un radical éthyle portant, en sa position 2, un substituant éliminable en milieu alcalin,
R représente un atome d'hydrogène, un radical hydroxy, un radical alkyle en $C_1$-$C_4$, un radical alcoxy en $C_1$-$C_4$, un radical carboxy ou un atome d'halogène,

n désigne un nombre égal à zéro, à 1 ou à 2,
M représente un atome d'hydrogène ou un atome de métal apte à former un sel, en particulier un atome de métal alcalin, et
An(–) représente un anion,
et dans laquelle le radical diazonium se trouve en position méta ou para relativement à l'atome d'azote du radical benzotriazolique.

18. Composé selon au moins une des revendications 15 à 17, caractérisé en ce que n désigne le nombre 1.

19. Composé selon au moins une des revendications 15 à 18, caractérisé en ce que R représente un atome d'hydrogène.

20. Procédé pour préparer un composé selon la revendication 15 ou selon la revendication 16 ou selon la revendication 17, procédé caractérisé en ce qu'on fait réagir le chloro-2 (hydroxy-2 éthylsulfonyl)-5 nitrobenzène avec un composé répondant à la formule générale (6) :

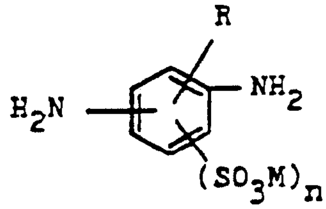

(6)

dans laquelle R, M et n ont les significations qui leur ont été données dans les revendications 15 à 19 et dans laquelle les deux radicaux amino primaires sont liés au noyau benzénique en position méta- ou para-,
on réduit, si on le désire, le composé selon la revendication 15 qui s'est ainsi formé de manière à le convertir en un composé selon la revendication 16, on fait réagir, si on le désire, le composé selon la revendication 16 avec un agent de diazotation pour obtenir un composé de diazonium selon la revendication 17, et, si on le désire, on transforme, dans les composés selon la revendication 16, le radical hydroxy-2 éthyle Y' en un autre radical Y'.

21. Application d'un composé de formule générale (7) selon la revendication 15 ou d'un composé de formule générale (5) selon la revendication 16 ou d'un composé de diazonium de formule générale (4) selon la revendication 17 à la synthèse de colorants, plus particulièrement de colorants azoïques.

**Revendications pour l'Etat Contractant : ES**

1. Procédé pour préparer un composé azoïque hydrosoluble qui répond à la formule générale (1) :

$$D-N=N-K \quad (1)$$

dans laquelle :
D représente un radical répondant à la formule générale (2) :

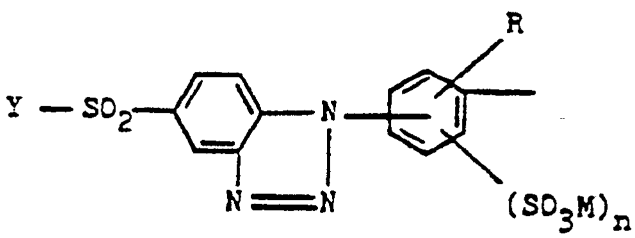

(2)

dans laquelle
Y représente un radical vinyle ou un radical de formule générale (3) :

$$-CH_2-CH_2-X \quad (3)$$

dans laquelle
X représente un substituant susceptible d'être éliminé par un alcali en engendrant le radical vinyle,
R représente un atome d'hydrogène, un radical hydroxy, un radical alkyle contenant de 1 à 4 atomes de carbone, un radical alcoxy contenant de 1 à 4 atomes de carbone, un radical carboxy ou un atome d'halogène,
n désigne un nombre égal à zéro ou à 1,
M représente un atome d'hydrogène ou un atome de métal formant un sel, en particulier un atome de métal alcalin, et
la liaison libre du noyau benzénique (vers le radical azo) est en position méta ou para relativement à un atome d'azote du radical benzotriazolique, et
K représente un radical d'un copulant hydrosoluble qui est capable de copuler une fois et qui peut contenir encore un radical azo, ou représente un radical d'un copulant hydrosoluble capable de copuler deux fois, chacun de ces copulants appartenant à la série des aminobenzènes, des phénols, en particulier de leurs acides sulfoniques et de leurs acides carboxyliques, des naphtols, en particulier de leurs acides sulfoniques, des aminonaphtols, en particulier de leurs acides sulfoniques, des acylaminonaphtols, en particulier de leurs acides sulfoniques, à radical acyle dérivant d'un acide alcane-carboxylique ou alcène-carboxylique contenant respectivement de 1 à 4, ou de 2 à 4, atomes de carbone dans la partie alkyle ou alcényle, d'un acide carboxylique aromatique, ou d'un acide carbamique substitué à l'azote, ou à la série des acides dihydroxy-naphtalène-sulfoniques, des acides phénylazo- et naphtylazo-aminonaphtol-sulfoniques, des pyrazolones-5 et amino-5 pyrazoles, des acétoacétylarylides, des hydroxy-2-pyridones-6 et des hydroxyquinoléines,
procédé caractérisé en ce qu'on copule un composé de diazonium répondant à la formule générale (4) :

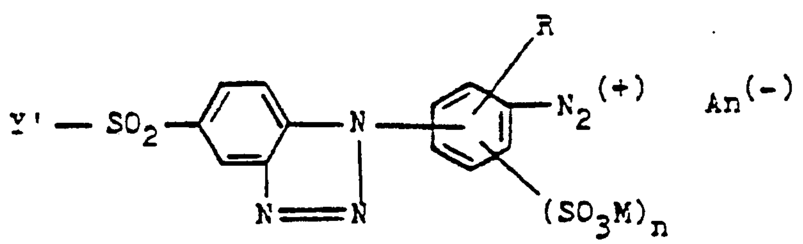

(4)

dans laquelle R, M et n ont les significations indiquées ci-dessus, Y′ a l'une des significations de Y ou représente un radical hydroxy-2 éthyle, An(–) représente un anion, et le radical diazonium se trouve en position méta ou para par rapport à un atome d'azote du radical benzotriazolique,
avec un copulant répondant à la formule générale H-K dans laquelle K a la signification indiquée ci-dessus, on fait réagir éventuellement le composé azoïque formé avec un autre composé diazoïque ou un autre copulant, puis on transforme éventuellement le radical Y′, lorsqu'il représente un radical hydroxy-2 éthyle, en un radical Y.

2. Variante du procédé selon la revendication 1, variante caractérisée en ce qu'on fait réagir un composé aminé répondant à la formule générale (5) :

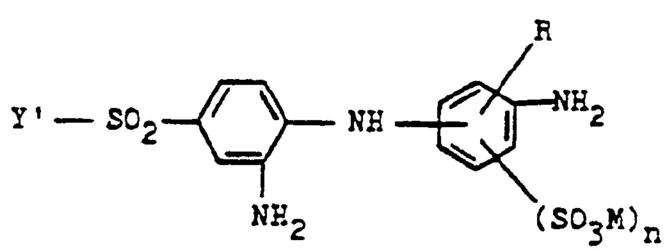

(5)

dans laquelle Y′, R, M et n ont les significations indiquées à la revendication 1, et le radical amino secondaire se trouve en position méta ou para relativement au radical amino primaire,
avec deux fois la quantité équimolaire d'un agent de diazotation, et on continue à faire réagir le composé de diazonium du composé aminé de formule générale (4) de la manière décrite à la revendication 1.

3. Procédé selon l'une des revendications 1 et 2, caractérisé en ce que K représente un radical répondant à la formule générale :

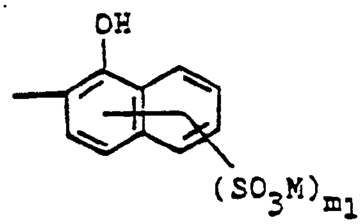

dans laquelle $m_1$ représente un nombre égal à 1, à 2 ou à 3.

4. Procédé selon l'une des revendications 1 et 2, caractérisé en ce que K représente un radical répondant à la formule générale :

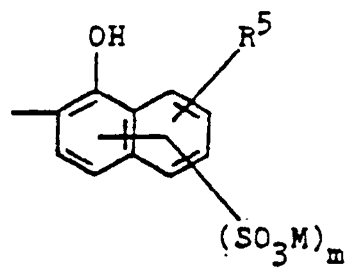

dans laquelle $R^5$ représente un radical benzoylamino ou un radical alcanoylamino contenant de 2 à 5 atomes de carbone, et m est égal à 1 ou à 2.

5. Procédé selon l'une des revendications 1 et 2, caractérisé en ce que K représente un radical répondant à la formule générale :

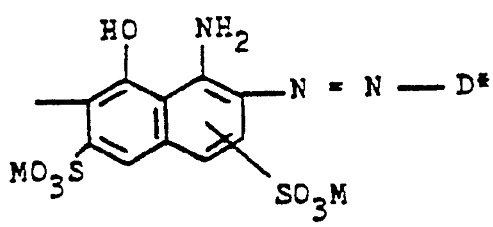

dans laquelle D* représente un radical répondant à la formule générale :

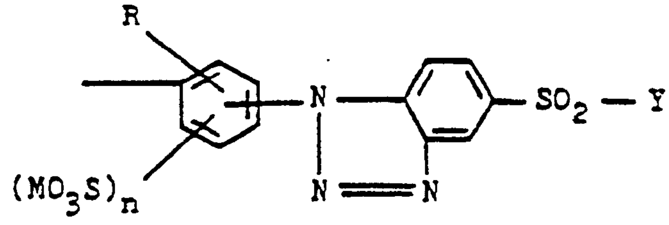

dans laquelle R, M, n et Y ont les significations indiquées à la revendication 1.

6. Procédé selon l'une des revendications 1 et 2, caractérisé en ce que K représente un radical répondant à la formule générale :

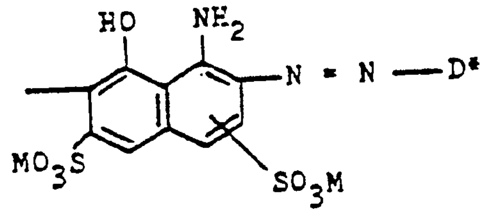

dans laquelle
M a l'une des significations indiquées à la revendication 1
et
D* représente

– un radical phényle éventuellement porteur de 1, de 2 ou de 3 substituants pris dans l'ensemble constitué par les alkyles en $C_1$-$C_4$, les alcoxy en $C_1$-$C_4$, le chlore, le brome, l'hydroxy, le carboxy, le sulfo, le carbamoyle, le sulfamoyle et les alcanoylamino en $C_2$-$C_5$, et/ou porteur d'un radical de formule générale $-SO_2$-Y dans lequel Y a l'une des significations indiquées à la revendication 1, ou

– un radical naphtyle qui porte 1, 2 ou 3 radicaux sulfo, ou 1 ou 2 radicaux sulfo et 1 ou 2 radicaux répondant à la formule générale $-SO_2$-Y dans laquelle Y a l'une des significations indiquées à la revendication 1, ou seulement un tel radical $-SO_2$-Y.

7. Composé selon au moins une des revendications 1 à 6, caractérisé en ce que n est égal à 1.

8. Composé selon au moins une des revendications 1 à 7, caractérisé en ce que R représente un atome d'hydrogène.

9. Composé selon au moins une des revendications 1 à 8, caractérisé en ce que Y représente un radical vinyle ou un radical sulfato-2 éthyle.

10. Composé selon au moins une des revendications 1 à 9, caractérisé en ce que Y représente un radical sulfato-2 éthyle.

11. Composé selon au moins une des revendications 1 à 10, caractérisé en ce que M représente un atome d'hydrogène ou un métal alcalin.

12. Application d'un composé de formule (1) selon la revendication 1 à la teinture (y compris à l'impression) d'une matière contenant des radicaux hydroxy et/ou carbamoyles, plus particulièrement d'une matière fibreuse de ce genre.

13. Procédé pour teindre (y compris pour imprimer) une matière contenant des radicaux hydroxy et/ou carbamoyles, plus particulièrement une matière fibreuse de ce genre, selon lequel on applique un colorant sur la matière, ou on introduit un colorant dans la matière, et on le fixe par la chaleur et/ou au moyen d'un agent alcalin, procédé caractérisé en ce qu'on utilise, comme colorant, un composé de formule (1) selon la revendication 1.

14. Procédé pour préparer un composé répondant à la formule générale (7) :

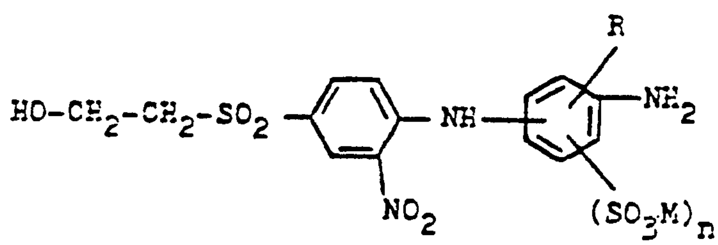

(7)

dans laquelle
R représente un atome d'hydrogène, un radical hydroxy, un radical alkyle en $C_1$-$C_4$, un radical alcoxy en $C_1$-$C_4$, un radical carboxy ou un atome d'halogène,
n désigne un nombre égal à zéro, à 1 ou à 2, et
M représente un atome d'hydrogène ou un atome de métal apte à former un sel, en particulier un atome de métal alcalin,
et dans laquelle le radical amino secondaire se trouve en position méta ou para relativement au radical amino primaire ou pour préparer un composé répondant à la formule générale (5) :

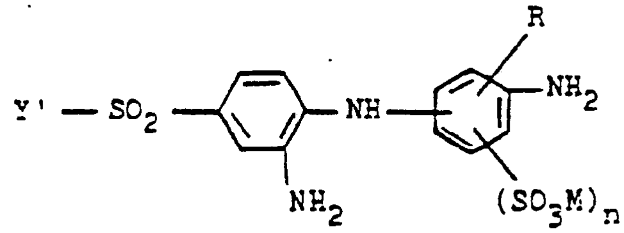

(5)

dans laquelle
Y' représente un radical vinyle ou hydroxy-2 éthyle ou un radical éthyle portant, en sa position 2, un substituant éliminable en milieu alcalin,
R représente un atome d'hydrogène, un radical hydroxy, un radical alkyle en $C_1$-$C_4$, un radical alcoxy en $C_1$-$C_4$, un radical carboxy ou un atome d'halogène,
n désigne un nombre égal à zéro, à 1 ou à 2, et
M représente un atome d'hydrogène ou un atome de métal apte à former un sel, en particulier un atome de métal alcalin,
et dans laquelle le radical amino secondaire se trouve en position méta ou para relativement au radical amino primaire, ou pour préparer un composé de diazonium répondant à la formule générale (4) :

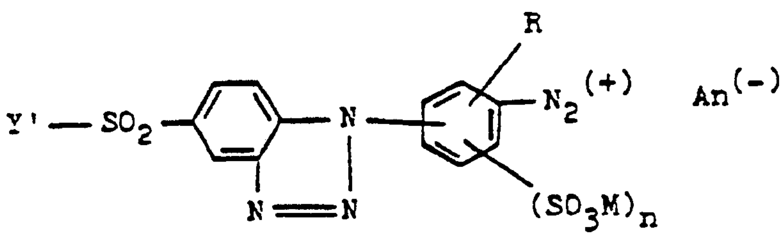

(4)

dans laquelle
Y' représente un radical vinyle ou hydroxy-2 éthyle ou un radical éthyle portant, en sa position 2, un substituant éliminable en milieu alcalin,
R représente un atome d'hydrogène, un radical hydroxy, un radical alkyle en $C_1$-$C_4$, un radical alcoxy en $C_1$-$C_4$, un radical carboxy ou un atome d'halogène,
n désigne un nombre égal à zéro, à 1 ou à 2,
M représente un atome d'hydrogène ou un atome de métal apte à former un sel, en particulier un atome de métal alcalin, et
An(–) représente un anion,
et dans laquelle le radical diazonium se trouve en position méta ou para relativement à un atome d'azote du radical benzotriazolique,
procédé caractérisé en ce qu'on fait réagir le chloro-2 (hydroxy-2 éthylsulfonyl)-5 nitrobenzène avec un composé répondant à la formule générale (6) :

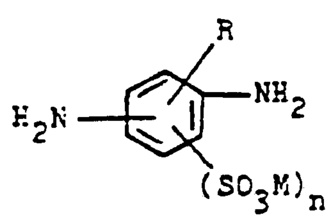

(6)

dans laquelle R, M et n ont les significations indiquées à la revendication 14 et dans laquelle les deux radicaux amino primaires se trouvent, sur le noyau benzénique, en position méta ou para l'un par rapport à l'autre,
on réduit, si on le désire, le composé de formule (7) ainsi formé dans lequel Y' représente un radical hydroxy-2 éthyle, de manière à le convertir en le composé de formule (5) dans lequel Y' représente un radical hydroxy-2

éthyle, on fait réagir, si on le désire, le composé de formule (5) dans lequel Y' représente un radical hydroxy-2 éthyle, avec un agent de diazotation, de manière à obtenir le composé de diazonium de formule (4) dans lequel Y' représente un radical hydroxy-2 éthyle, et, si on le désire, on transforme, dans les composés de formules (7), (5) et (4), le radical hydroxy-2 éthyle Y' en un autre radical Y'.

15. Procédé selon la revendication 14, caractérisé en ce que n est égal à 1.

16. Procédé selon l'une des revendication 14 et 15, caractérisé en ce que R représente un atome d'hydrogène

17. Application d'un composé de formule générale (7) ou d'un composé de formule générale (5) ou d'un composé de diazonium de formule générale (4) selon la revendication 14 à la synthèse de colorants, plus particulièrement de colorants azoïques.

## Claims

### Claims for the Contracting States : BE, CH, DE, FR, GB, IT, LI

1. A water-soluble azo compound which corresponds to the formula (1)

$$D-N=N-K \quad (1)$$

in which D is a radical of the formula (2)

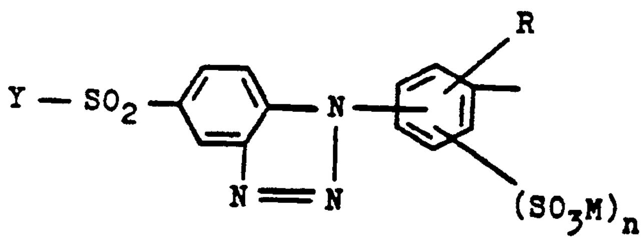

(2)

in which
Y denotes the vinyl group or a group of the general formula (3)

$$-CH_2-CH_2-X \quad (3)$$

in which
X is a substituent which can be eliminated by means of an alkali with formation of the vinyl group,
R is a hydrogen atom or a hydroxyl group, an alkyl group having 1 to 4 carbon atoms, an alkoxy group having 1 to 4 carbon atoms, a carboxyl group or a halogen atom,
n stands for the number zero or 1,
M is a hydrogen atom or a salt-forming metal atom, such as, in particular, an alkali metal atom, and
the free bond from the benzene ring to the azo group is bound in the meta- or para-position to the one nitrogen atom of the benzotriazole radical ;
K is a radical of a monocouplable water-soluble coupling component, which can additionally contain an azo group, or the radical of a dicouplable water-soluble coupling component, each from the series comprising the aminobenzenes, the phenols, in particular the sulfonic acids and carboxylic acids thereof, the naphthols, in particular the sulfonic acids thereof, the aminonaphthols, in particular the sulfonic acids thereof, and the acylaminonaphthols, in particular the sulfonic acids thereof, containing the acyl radical of an alkanecarboxylic acid or alkenecarboxylic acid each having 1 to 4 or 2 to 4 carbon atoms in the alkyl or alkenyl radical respectively, or of an aromatic carboxylic acid or an aromatic sulfonic acid or N-substituted carbamic acid, or from the series comprising the dihydroxynaphthalenesulfonicacids, the phenylazo- and naphthylazo-aminonaphtholsulfonic acids, the 5-pyrazolones and 5-aminopyrazoles, the acetoacetylarylides, the 2-hydroxy-6-pyridones and the hydroxyquinolines.

2. A compound as claimed in claim 1, wherein K is a radical of the formula

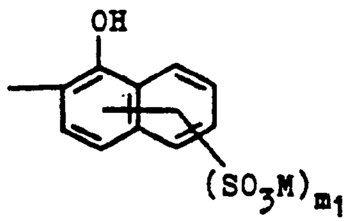

in which $m_1$ stands for the number 1, 2 or 3.

3. A compound as claimed in claim 1, wherein K is a radical of the formula

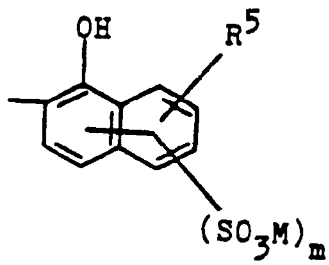

in which $R^5$ is the benzoylamino group or an alkanoylamino group having 2 to 5 carbon atoms, and m stands for the number 1 or 2.

4. A compound as claimed in claim 1, wherein K is a radical of the formula

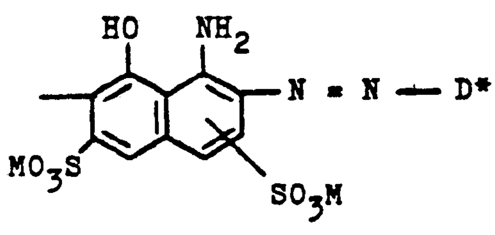

in which D* is a radical of the formula

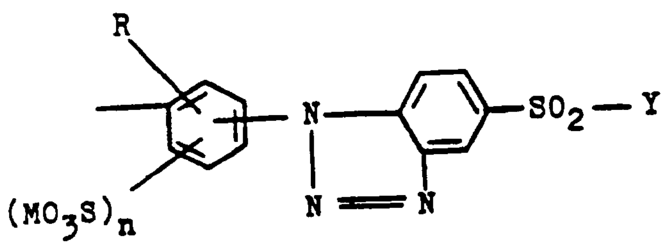

in which R, M, n and Y have one of the meanings mentioned in claim 1.

5. A compound as claimed in claim 1, wherein K is a radical of the formula

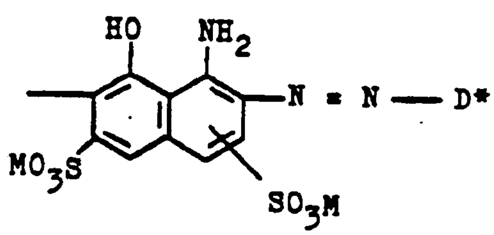

in which M has one of the meanings mentioned in claim 1 and D* is a phenyl radical which may be substituted

by 1, 2 or 3 substituents from the series comprising alkyl having 1 to 4 carbon atoms, alkoxy having 1 to 4 carbon atoms, chlorine, bromine, hydroxyl, carboxyl, sulfo, carbamoyl, sulfamoyl and alkanoylamino having 2 to 5 carbon atoms and/or by a group of the formula $-SO_2$-Y where Y has a meaning mentioned in claim 1, or is a naphthyl radical which is substituted by 1, 2 or 3 sulfo groups or by 1 or 2 sulfo groups and 1 or 2 groups of the formula $-SO_2$-Y where Y has a meaning mentioned in claim 1, or by only one such $-SO_2$-Y group.

6. A compound as claimed in at least one of claims 1 to 5, wherein n stands for the number 1.

7. A compound as claimed in at least one of claims 1 to 6, wherein R denotes a hydrogen atom.

8. A compound as claimed in at least one of claims 1 to 7, wherein Y stands for the vinyl group or a β-sulfatoethyl group.

9. A compound as claimed in at least one of claims 1 to 8, wherein Y is a β-sulfatoethyl group.

10. A compound as claimed in at least one of claims 1 to 9, wherein M stands for a hydrogen atom or an alkali metal.

11. A process for the preparation of a compound of the formula (1) mentioned and defined in claim 1, which comprises coupling a diazonium compound of the formula (4)

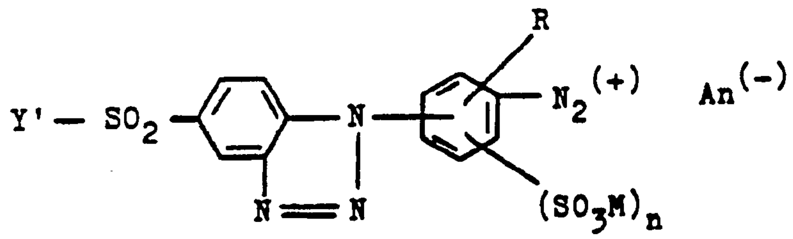

(4)

in which R, M and n have the meanings mentioned in claim 1, Y′ has one of the meanings of Y or is the β-hydroxyethyl group, $An^{(-)}$ stands for an anion, and the diazonium group is bound in the meta- or para-position to the one nitrogen atom of the benzotriazole radical, with a coupling component of the formula H-K where K has the meaning mentioned in claim 1, and reacting the azo compound formed, if necessary, with a further diazo compound or coupling component, and subsequently converting the Y′ group, if it stood for a β-hydroxyethyl group, where desired, into a Y group.

12. A modification of the process as claimed in claim 11, wherein an amino compound of the formula (5)

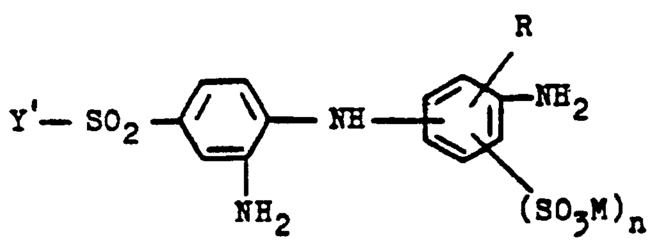

(5)

in which Y′, R, M and n have the meanings mentioned in claim 11 and the secondary amino group is bound in the meta- or para-position to the primary amino group, is reacted with twice the equimolar amount of a diazotizing agent, and the resultant diazonium compound of the amino compound corresponding to the formula (4) is reacted further in the manner given in claim 11.

13. The use of a compound of the general formula (1) from claim 1 for dyeing (including printing) hydroxyl and/or carboxamide group-containing material, in particular fiber material.

14. A method of dyeing (including printing) hydroxyl and/or carboxamide group-containing material, in particular fiber material, in which method a dye is applied to the material or introduced into the material and fixed by means of heat and/or with the aid of an alkaline agent, wherein the dye employed is a compound of the general formula (1) from claim 1.

15. A compound which corresponds to the formula (7)

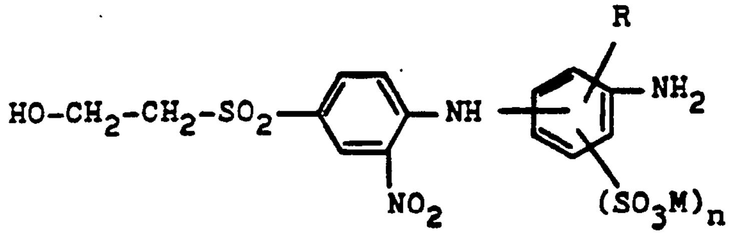 (7)

in which R is a hydrogen atom or a hydroxyl group, an alkyl group having 1 to 4 carbon atoms, an alkoxy group having 1 to 4 carbon atoms, a carboxyl group or a halogen atom, n stands for the number zero, 1 or 2, and M is a hydrogen atom or a salt-forming metal atom, such as, in particular, an alkali metal atom, and the secondary amino group is bound in the meta- or para-position to the primary amino group.

16. A compound which corresponds to the formula (5)

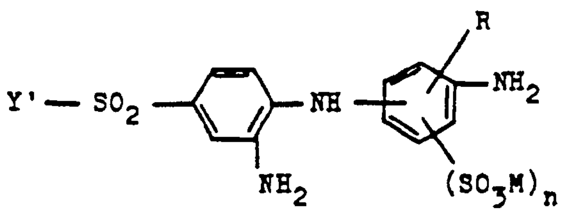 (5)

in which Y′ is the vinyl group, the β-hydroxyethyl group or an ethyl group having a substituent in the β-position which can be eliminated by means of alkali, R is a hydrogen atom, a hydroxyl group, an alkyl group having 1 to 4 carbon atoms, an alkoxy group having 1 to 4 carbon atoms, a carboxyl group or a halogen atom, n stands for the number zero, 1 or 2, and M is a hydrogen atom or a salt-forming metal atom, such as, in particular, an alkali metal atom, and the secondary amino group is bound in the meta- or para-position to the primary amino group.

17. A diazonium compound which corresponds to the formula (4)

in which Y′ is the vinyl group, the β-hydroxyethyl group or an ethyl group having a substituent in the β-position which can be eliminated by means of alkali, R is a hydrogen atom, a hydroxyl group, an alkyl group having 1 to 4 carbon atoms, an alkoxy group having 1 to 4 carbon atoms, a carboxyl group or a halogen atom, n stands for the number zero, 1 or 2, and M is a hydrogen atom or a salt-forming metal atom, such as, in particular, an alkali metal atom, $An^{(-)}$ stands for an anion, and the diazonium group is bound in the meta- or para-position to the one nitrogen atom of the benzotriazole radical.

18. A compound as claimed in at least one of claims 15 to 17, wherein n stands for the number 1.

19. A compound as claimed in at least one of claims 15 to 18, wherein R stands for a hydrogen atom.

20. A process for the preparation of a compound of claims 15 or of claim 16 or of claim 17, wherein 2-chloro-5-(β-hydroxyethylsulfonyl) nitrobenzene is reacted with a compound of the formula (6)

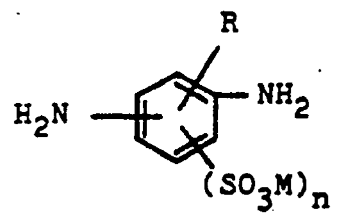

(6)

in which R, M and n have one of the meanings mentioned in claims 15 to 19, and the two primary amino groups are bound in the meta- or para-position to one another on the benzene ring, and, if desired, the resultant compound of claim 15 is reduced to the compound of claim 16, and, if desired, the compound of claim 16 is reacted with a diazotizing agent to give the diazonium compound of claim 17, and, if desired, the β-hydroxyethyl group standing for the moiety Y′ in the compound of claim 16 is converted into another Y′ group.

21. The use of a compound of the formula (7) of claim 15 or a compound of the formula (5) of claim 16 or a diazonium compound of the formula (4) of claim 17 for the synthesis of dyes, in particular azo dyes.

**Claims for the Contracting State : ES**

1. A process for the preparation of a water-soluble azo compound which corresponds to the formula (1)

$$D-N=N-K \quad (1)$$

in which D is a radical of the general formula (2)

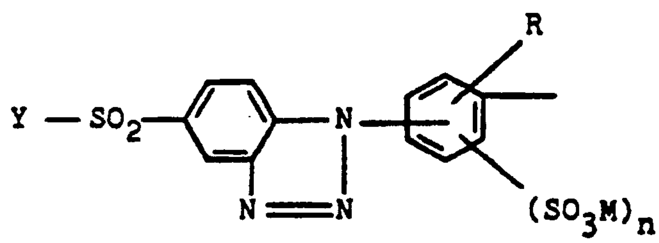

(2)

in which Y denotes the vinyl group or a group of the general formula (3)

$$-CH_2\text{-}CH_2\text{-}X \quad (3)$$

in which

X is a substituent which can be eliminated by means of an alkali with formation of the vinyl group,

R is a hydrogen atom or a hydroxyl group, an alkyl group having 1 to 4 carbon atoms, an alkoxy group having 1 to 4 carbon atoms, a carboxyl group or a halogen atom,

n stands for the number zero or 1,

M is a hydrogen atom or a salt-forming metal atom, such as, in particular, an alkali metal atom, and

the free bond from the benzene ring to the azo group is bound in the meta- or para–position to the one nitrogen atom of the benzotriazole radical ;

K is a radical of a monocouplable water-soluble coupling component, which can additionally contain an azo group, or the radical of a di-couplable water-soluble coupling component, each from the series comprising the aminobenzenes, the phenols, in particular the sulfonic acids and carboxylic acids thereof, the naphthols, in particular the sulfonic acids thereof, the aminonaphthols, in particular the sulfonic acids thereof, and the acylaminonaphthols, in particular the sulfonic acids thereof, containing the acyl radical of an alkanecarboxylic acid or alkenecarboxylic acid each having 1 to 4 or 2 to 4 carbon atoms in the alkyl or alkenyl radical respectively, or of an aromatic carboxylic acid or an aromatic sulfonic acid or N-substituted carbamic acid, or from the series comprising the dihydroxynaphthalenesulfonicacids, the phenylazo- and naphthylazo-aminonaphtholsulfonic acids, the 5-pyrazolones and 5-aminopyrazoles, the acetoacetylarylides, the 2-hydroxy-6-pyridones and the hydroxyquinolines, which comprises coupling a diazonium compound of the formula (4)

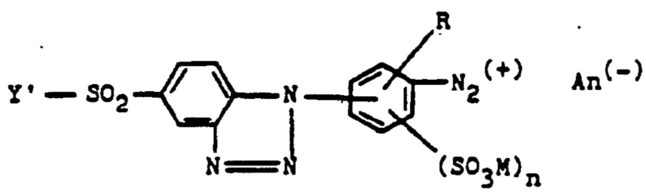

(4)

in which R, M and n have the abovementioned meanings, Y′ has one of the meanings of Y or is the β-hydroxyethyl group, $An^{(-)}$ stands for an anion, and the diazonium group is bound in the meta- or para-position to the one nitrogen atom of the benzotriazole radical, with a coupling component of the formula H-K where K has the abovementioned meaning, and reacting the azo compound formed, if necessary, with a further diazo compound or coupling component, and subsequently converting the Y′ group, if it stood for a β-hydroxyethyl group, where desired, into a Y group.

2. A modification of the process as claimed in claim 1, wherein an amino compound of the formula (5)

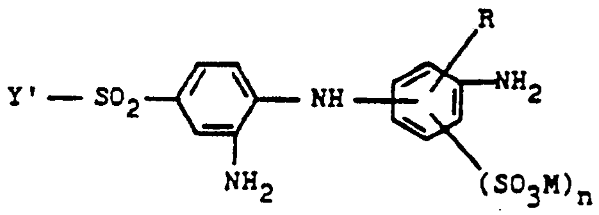

(5)

in which Y′, R, M and n have the meanings mentioned in claim 1 and the secondary amino group is bound in the meta- or para-position to the primary amino group, is reacted with twice the equimolar amount of a diazotizing agent, and the resultant diazonium compound of the amino compound corresponding to the formula (4) is reacted further in the manner given in claim 1.

3. The process as claimed in claim 1 or 2, wherein K is a radical of the formula

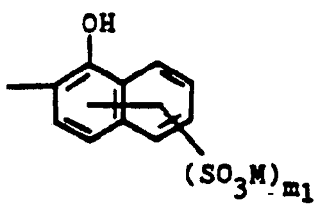

in which $m_1$ stands for the number 1, 2 or 3.

4. The process as claimed in claim 1 or 2, wherein K is a radical of the formula

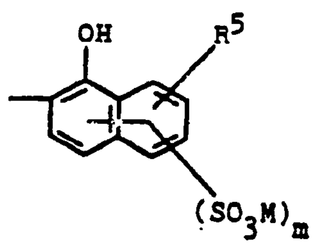

in which $R^5$ is the benzoylamino group or an alkanoylamino group having 2 to 5 carbon atoms, and m stands for the number 1 or 2.

5. The process as claimed in claim 1 or 2, wherein K is a radical of the formula

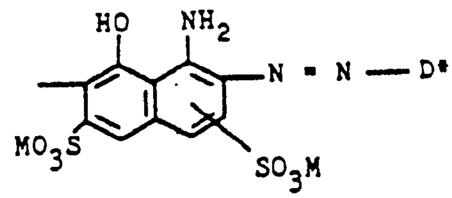

in which D* is a radical of the formula

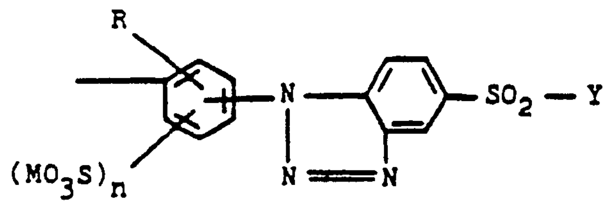

in which R, M, n and Y have one of the meanings mentioned in claim 1.

6. The process as claimed in claim 1 or 2, wherein K is a radical of the formula

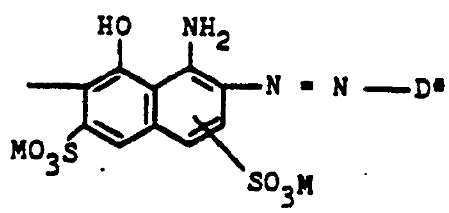

in which M has one of the meanings mentioned in claim 1 and D* is a phenyl radical which may be substituted by 1, 2 or 3 substituents from the series comprising alkyl having 1 to 4 carbon atoms, alkoxy having 1 to 4 carbon atoms, chlorine, bromine, hydroxyl, carboxyl, sulfo, carbamoyl, sulfamoyl and alkanoylamino having 2 to 5 carbon atoms and/or by a group of the formula $-SO_2$-Y where Y has a meaning mentioned in claim 1, or is a naphthyl radical which is substituted by 1, 2 or 3 sulfo groups or by 1 or 2 sulfo groups and 1 or 2 groups of the formula $-SO_2$-Y where Y has a meaning mentioned in claim 1, or only by one such $-SO_2$-Y group.

7. A compound as claimed in at least one of claims 1 to 6, wherein n stands for the number 1.

8. A compound as claimed in at least one of claims 1 to 7, wherein R denotes a hydrogen atom.

9. A compound as claimed in at least one of claims 1 to 8, wherein Y stands for the vinyl group or a β-sulfatoethyl group.

10. A compound as claimed in at least one of claims 1 to 9, wherein Y is a β-sulfatoethyl group.

11. A compound as claimed in at least one of claims 1 to 10, wherein M stands for a hydrogen atom or an alkali metal.

12. The use of a compound of the formula (1) from claim 1 for dyeing (including printing) hydroxyl and/or carboxamide group-containing material, in particular fiber material.

13. A method of dyeing (including printing) hydroxyl and/or carboxamide group-containing material, in particular fiber material, in which method a dye is applied to the material or introduced into the material and fixed by means of heat and/or with the aid of an alkaline agent, wherein the dye employed is a compound of the formula (1) from claim 1.

14. A process for the preparation of a compound which corresponds to the formula (7)

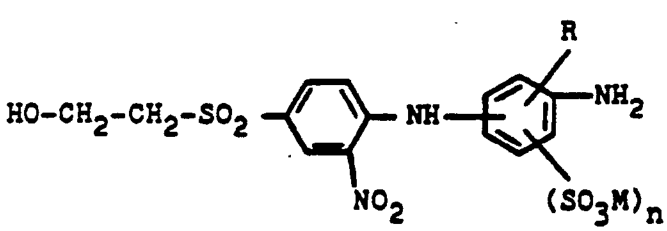

(7)

in which R is a hydrogen atom or a hydroxyl group, an alkyl group having 1 to 4 carbon atoms, an alkoxy group having 1 to 4 carbon atoms, a carboxyl group or a halogen atom, n stands for the number zero, 1 or 2, and M is a hydrogen atom or a salt-forming metal atom, such as, in particular, an alkali metal atom, and the secondary amino group is bound in the meta- or para-position to the primary amino group, or for the preparation of a compound which corresponds to the formula (5)

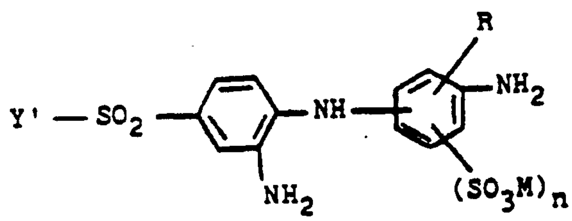

(5)

in which Y′ is the vinyl group, the β-hydroxyethyl group or an ethyl group having a substituent in the β-position which can be eliminated by means of alkali, R is a hydrogen atom, a hydroxyl group, an alkyl group having 1 to 4 carbon atoms, an alkoxy group having 1 to 4 carbon atoms, a carboxyl group or a halogen atom, n stands for the number zero, 1 or 2, and M is a hydrogen atom or a salt-forming metal atom, such as, in particular, an alkali metal atom, and the secondary amino group is bound in the meta- or para-position to the primary amino group, or for the preparation of a diazonium compound which corresponds to the formula (4)

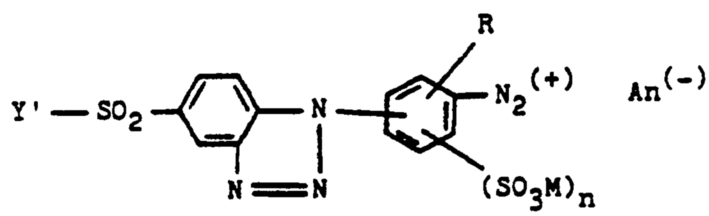

(4)

in which Y′ is the vinyl group, the β-hydroxyethyl group or an ethyl group having a substituent in the β-position which can be eliminated by means of alkali, R is a hydrogen atom, a hydroxyl group, an alkyl group having 1 to 4 carbon atoms, an alkoxy group having 1 to 4 carbon atoms, a carboxyl group or a halogen atom, n stands for the number zero, 1 or 2, and M is a hydrogen atom or a salt-forming metal atom, such as, in particular, an alkali metal atom, $An^{(-)}$ stands for an anion, and the diazonium group is bound in the meta- or para-position to the one nitrogen atom of the benzotriazole radical, wherein 2-chloro-5-(β-hydroxyethylsulfonyl)-nitrobenzene is reacted with a compound of the formula (6)

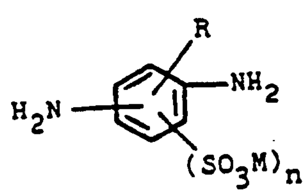

(6)

in which R, M and n have one of the meanings mentioned in claim 14, and the two primary amino groups are bound in the meta- or para-position to one another on the benzene ring, and, if desired, the resultant compound of the formula (7) where Y′ is β-hydroxyethyl is reduced to the compound of the formula (5) where Y′ is β-hydroxyethyl, and, if desired, the compound of the formula (5) where Y′ is β-hydroxyethyl is reacted with a diazotizing agent to give the diazonium compound of the formula (4) where Y′ is β-hydroxyethyl, and, if desired, the β-hydroxyethyl group standing for the moiety Y′ in the compounds of the formulae (7), (5) and (4) is converted into another Y′ group.

15. A process as claimed in claim 14, wherein n stands for the number 1.

16. A process as claimed in claim 14 or 15, wherein R stands for a hydrogen atom.

17. The use of a compound of the general formula (7) or a compound of the general formula (5) or a diazonium compound of the general formula (4) of claim 14 for the synthesis of dyes, in particular azo dyes.